(19) Europäisches Patentamt / European Patent Office / Office européen des brevets

(11) **EP 3 258 197 B1**

(12) **EUROPÄISCHE PATENTSCHRIFT**

(45) Veröffentlichungstag und Bekanntmachung des Hinweises auf die Patenterteilung:
**15.04.2020   Patentblatt 2020/16**

(51) Int Cl.:
*F26B 3/06* *(2006.01)*          *B29B 13/06* *(2006.01)*
*F26B 17/12* *(2006.01)*          *F26B 21/06* *(2006.01)*

(21) Anmeldenummer: **16174560.9**

(22) Anmeldetag: **15.06.2016**

(54) **ANORDNUNG ZUM ENTFEUCHTEN VON GRANULATFÖRMIGEM SCHÜTTGUT UND VERFAHREN HIERFÜR**

ASSEMBLY FOR DRYING OF GRANULAR BULK GOODS AND METHOD FOR SAME

SYSTÈME DE DESHUMIDIFICATION DE MARCHANDISES EN VRAC SOUS FORME DE GRANULES ET PROCÉDÉ ASSOCIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.12.2017   Patentblatt 2017/51**

(73) Patentinhaber: **Gerresheimer Regensburg GmbH 93047 Regensburg (DE)**

(72) Erfinder:
 • **ZIMMERER, Stephan 92723 Gleiritsch (DE)**
 • **ZENGER, Tobias 92533 Wernberg-Köblitz (DE)**

(74) Vertreter: **Reichert & Lindner Partnerschaft Patentanwälte Bismarckplatz 8 93047 Regensburg (DE)**

(56) Entgegenhaltungen:
EP-A1- 2 186 613          EP-A1- 2 224 196
DE-A1- 3 929 858          DE-A1- 19 719 483
US-A1- 2006 168 843          US-A1- 2010 312 503

**Beschreibung**

Die Erfindung betrifft eine Anordnung zum Entfeuchten von granulatförmigem Schüttgut.

Ferner betrifft die Erfindung ein Verfahren zum Entfeuchten von Schüttgut, insbesondere von Schüttgut aus Kunststoff.

Die deutsche Patentanmeldung DE 197 19 483 A1 offenbart eine Trocknungsanlage, die einen Trockenlufterzeuger hat, der über eine Zuführleitung für Trockenluft mit einem Trockentrichter zur Aufnahme von zu trocknendem Material verbunden ist. Der Trockentrichter ist mit dem Trockenlufterzeuger über eine Rückführleitung für die mit Feuchtigkeit beladene Trockenluft verbunden. Die Anlage hat ferner eine Fördereinrichtung zum Transport des zu trocknenden Materials zum Trockentrichter. Um die Trocknungsanlage so auszubilden, dass die dem Trockentrichter zugeführte Trockenluftmenge entsprechend dem jeweiligen Materialdurchsatz zugeführt wird, wird der Materialdurchsatz des Trockentrichters erfasst und als Messgröße einer Steuerung zugeführt, in der als weitere Messgröße die Art des zu trocknenden Materials eingebbar ist. Die Steuerung ermittelt aus diesen Messgrößen Trocknungsparameter, die als Ausgangssignale zur weiteren Verarbeitung zur Verfügung stehen. Mit der Trocknungsanlage wird dem Trockentrichter die für das zu trocknende Material optimale Trockenluftmenge zugeführt.

Die deutsche Offenlegungsschrift DE 39 29 858 A1 offenbart ein Verfahren zum Trocknen von Schüttgut, bei dem in einem geschlossenen Luftkreislauf trockene erwärmte Luft mittels eines Gebläses durch das Schüttgut bewegt wird, um dem Schüttgut Feuchtigkeit zu entziehen. Die feuchtigkeitsbeladene Abluft aus dem Schüttgutbehälter wird wieder getrocknet, mittels einer Heizeinrichtung aufgeheizt und dann erneut dem Schüttgutbehälter zugeführt. Die dem Schüttgutbehälter zugeführte Luftmenge wird in Abhängigkeit von dem Schüttgutdurchsatz gesteuert.

Das europäische Patent EP 2 186 613 offenbart eine Anlage zum Entfeuchten und/oder Trocknen von Kunststoffmaterialien. Die Anlage umfasst einen Prozessfluidgenerator und mindestens einen Trichter für Kunststoffmaterial, innerhalb welchem das Prozessfluid eingeführt wird. Ventile werden eingestellt, um die Fluidströmungsrate des Prozesses zu steuern. Sensoren sind zum Messen der Fluidströmungsrate vorgesehen. Eine elektronische Steuereinheit dient zur Steuerung der Materialmenge zu den Trichtern und der Durchflussrate des Prozessfluids aus dem Generator in die jeweiligen Trichter.

Das Dokument EP 2224196 A1 offenbart ein Verfahren zur Trocknung von granulatförmigem Material.

Der Erfindung liegt die Aufgabe zugrunde, eine Anordnung zum Entfeuchten von Schüttgut zu schaffen, mit der eine sichere und definierte Einstellung eines Soll-Feuchtegehalts für das zu verarbeitende Schüttgut erzielt und sichergestellt werden kann und nur Schüttgut zur Verarbeitung freigegeben wird, das den für die Verarbeitung erforderlichen Feuchtegehalt aufweist.

Diese Aufgabe wird durch eine Anordnung gelöst, die die Merkmale des Anspruchs 1 umfasst.

Der Erfindung liegt ferner die Aufgabe zugrunde, ein Verfahren zu schaffen, mit dem eine sichere und definierte Einstellung eines Soll-Feuchtegehalts für das zu verarbeitende Schüttgut erzielt und sichergestellt werden kann und nur Schüttgut zur Verarbeitung freigegeben wird, das den für die Verarbeitung erforderlichen Feuchtegehalt aufweist.

Diese Aufgabe wird durch ein Verfahren gelöst, das die Merkmale des Anspruchs 6 umfasst.

Die abhängigen Ansprüche beschreiben optionale Ausführungsformen, die auch zur Erfindung gehören.

Bei dem granulatförmigen Schüttgut handelt es sich z.B. um Kunststoffgranulat, das mit den Verarbeitungsmaschinen zu spritzgegossenen Produkten verarbeitet werden kann.

Der Vorteil der Erfindung ist eine Stabilisierung der Prozessparameter an der Verarbeitungsmaschine bzw. den Verarbeitungsmaschinen durch die mit der Erfindung erzielbare konstante und definierte Restfeuchte des zu verarbeitenden granulatförmigen Schüttguts. Dadurch verhindert man Qualitätsschwankungen des hergestellten Produkts und der Produktionsausschuss wird reduziert.

Die Temperatur der den Trocknungstrichtern zur Entfeuchtung zugeführten Luft wird von zwei Temperaturfühlern gemessen. Dies dient zur Sicherheit, falls ein Temperaturfühler ausfallen würde. Die Messwerte der Temperaturfühler werden unmittelbar von der Steuerung verarbeitet. Abweichungen werden hier durch geregeltes Ansteuern und Anpassen der jedem der Trocknungstrichter zu- und vorgeordneten Heizung geregelt. Findet über den Zeitraum der minimalen Trocknungszeit kein Fördervorgang aus dem Trocknungstrichter statt, werden die Solltemperatur und die zugeführte Luftmenge reduziert, um eine Übertrocknung des Schüttguts im Trocknungstrichter zu verhindern. Bevorzugt wird zur Regulierung der Temperatur ein geschlossener Regelkreis mit PID-Algorithmus verwendet und zur Ansteuerung und zur Anpassung der Leistung der Heizung wird eine Pulsweitenmodulation verwendet.

Zur Förderung des Schüttguts aus den einzelnen Reservoirs in entsprechend ausgewählte Trocknungstrichter, ist mindestens eine Unterdruckpumpe vorgesehen, die mit dem Materialabscheider eines jeden Trocknungstrichters über eine Unterdruckleitung fluid verbunden ist. Der Materialabscheider ist dabei über eine Materialleitung mit mindestens einem der Reservoirs für Schüttgut verbunden. Jeder Materialabscheider kann durch den Kupplungsbahnhof und manuellem Umstecken der Leitung mit jeder Materialquelle verbunden werden. Zu jedem Zeitpunkt ist ein Materialabscheider aber immer nur mit einer Quelle gleichzeitig verbunden. Um eine genaue Menge an Schüttgut im Materialabscheider mit einem Förderzyklus zu fördern, ist ein Ventil in der Materialleitung aus mindestens einem der Reservoirs für Schüttgut vorgesehen. Mit dem Ventil ist nach einer maximalen Förderzeit oder aufgrund eines Signals vom Füllstandsensor des Materialabscheiders der Transport von Schüttgut aus dem jeweiligen Reservoir in den Materialabscheider freigebbar oder blockierbar. Es ist zu beachten, dass die maximale Förderzeit den Fördervorgang nur dann beendet, wenn von einem Reservoir nicht genug Schüttgut bzw. Material für einen Füllvorgang des Materialabscheiders zur Verfügung gestellt werden kann. Dies dient zum Verhalten im Fehlerfall.

Der Materialabscheider eines jeden Trocknungstrichters weist eine in den jeweiligen Trocknungstrichter schwenkbare Materialklappe auf, über die das jeweilige Schüttgut in den jeweiligen Trocknungstrichter verbracht werden kann.

Ein Ventil ist in einer Materialleitung von einem Materialabsaugkasten eines jeden Trocknungstrichters zu einem Verbraucher vorgesehen, mit dem der Transport des Schüttguts vom Materialabsaugkasten zum Verbraucher freigebbar oder blockierbar ist.

Dem Trockengaserzeuger sind ein steuerbares Gebläse und ein Taupunkt- und Durchflusssensor zugeordnet. Die zentrale Steuerung ist über die Kommunikationsverbindung mit dem Gebläse und der Taupunkt- und Durchflusssensor ist über die Kommunikationsverbindung mit der zentralen Steuerung verbunden.

Beim erfindungsgemäßen Verfahren sind mindestens zwei Trocknungstrichter vorgesehen. Das erfindungsgemäße Verfahren stellt somit auch ein Gasmengenmanagement bzw. Luftmengenmanagement innerhalb der Anordnung zu Verfügung. Die mit den jeweiligen Durchflusssensoren gemessenen Werte in den Leitungen zu den Trocknungstrichtern werden mit den in der Datenbank errechneten und hinterlegten Soll-Werten für die zur Trocknung erforderliche Gas- bzw. Luftmenge verglichen. Der Soll-Wert sowie die jeweils benötigte Gas- bzw. Luftmenge wird anhand der dem jeweiligen Material zugehörigen Parameter (vom Hersteller vorgegeben und in der Datenbank hinterlegt) und dem gemessenen Materialdurchsatz berechnet. Die automatische und motorisch betriebene Stellklappe, die in jeder der Leitungen zum jeweiligen Trocknungstrichter vorgesehen ist, wird dann automatisch so eingestellt, dass die aktiven Trocknungstrichter mit einer ausreichenden Gas- bzw. Luftmenge versorgt werden, damit eine Trocknung des Schüttguts innerhalb der minimalen Trocknungszeit erfolgen kann. Bei Trocknungstrichtern, bei denen innerhalb eines definierten Zeitraums kein Fördervorgang zu einem Verbraucher (Spritzgießmaschine) stattgefunden hat, wird die Gasmenge zum Trocknungstrichter mittels der Stellklappe automatisch reduziert, damit keine Übertrocknung erfolgt. Hinzu kommt der positive Effekt der Energieeinsparung.

Ein Vorteil des erfindungsgemäßen Verfahrens ist die bedarfsgerechte Luftmengenregelung für jeden einzelnen Trocknungstrichter und zwar in Abhängigkeit der jeweils benötigten Luftmenge pro Trocknungstrichter. Die vorhandene Gesamtluftmenge in der Anordnung zum Trocknen des Schüttguts kann somit optimal aufgeteilt werden.

Ebenfalls kann zur Energieeinsparung ein Trocknungstrichter in einen Standby-Modus gefahren werden. Dies kann z. B. der Fall sein, wenn der Trocknungstrichter längere Zeit nicht mehr aktiv gewesen ist, d.h. innerhalb eines definierten Zeitraums kein Fördervorgang zu einem Verbraucher (z.B. einer Spritzgießmaschine) stattgefunden hat. Wenn eine unterste Materialschicht ausreichend getrocknet wurde, d.h. den vom Hersteller empfohlenen Feuchtegehalt erreicht hat, und aus dem jeweiligen Trocknungstrichter für eine vorgegebene Zeit kein Material entnommen wurde, wird dieser Trocknungstrichter in einen Standby-Modus gefahren. Dies hat verschiedene Vorteile. Zum einen wird dadurch ein Schutz vor Übertrocknen erreicht und eine damit einhergehende Materialschädigung unterbunden. Des Weiteren wird hierdurch Trockenluft eingespart und anderen Trockentrichtern bei Bedarf zur Verfügung gestellt. Nicht zuletzt erreicht man dadurch eine gewisse Energieeinsparung.

Die Förderung des jeweiligen Typs des Schüttguts in den Materialabscheider des mindestens einen Trocknungstrichters wird mittels mindestens einer Unterdruckpumpe durchgeführt. Der Materialabscheider ist mit dem jeweiligen Reservoir für Schüttgut fluid verbunden und in einer Materialleitung vom Reservoir zum Materialabscheider ist ein Ventil vorgesehen. Das Ventil wird über die zentrale Steuerung gesteuert, damit die Förderung des Schüttguts in den Materialabscheider freigegeben oder unterbunden werden kann.

Der Materialabscheider eines jeden Trocknungstrichters hat eine in den jeweiligen Trocknungstrichter schwenkbare Materialklappe, über die das jeweilige Schüttgut in den jeweiligen Trocknungstrichter verbracht wird. Das Schüttgut wird dann vom Materialabscheider in den Trocknungstrichter verbracht. Nach Beenden des Fördervorgangs durch Abschalten des durch die Unterdruckpumpe erzeugten Unterdrucks wird aufgrund der Schwerkraft die schwenkbare Materialklappe geöffnet und das im Materialabscheider befindliche Schüttgut gelangt in den Trocknungstrichter.

Ein Durchsatz an Schüttgut aus dem jeweiligen Trocknungstrichter durch die jeweils angeschlossenen Verbraucher bzw. eine manuelle Materialentnahme aus dem Trockentrichter wird berechnet. Von der zentralen Steuerung wird ein Ventil in einer Materialleitung vom Materialabsaugkasten zum Verbraucher unterbrochen, wenn die noch verbleibende Trocknungszeit für die noch im Trocknungstrichter befindliche, unterste Schicht des Schüttguts nicht ausreicht, um einen Soll-Feuchtegehalt des Schüttguts der untersten Schicht sicherzustellen.

In einer der zentralen Steuerung zugeordneten Datenbank werden Daten zum Volumen eines jeden Trocknungstrichters, zum Volumen eines jeden Materialabscheiders , zu Materialparametern des Schüttguts, wie z.B. Materialnummer, Materialname, Soll-Temperatur für das Material im jeweiligen Trocknungstrichter, zur minimalen Trocknungszeit des Schüttguttyps im jeweiligen Trocknungstrichter und eine Herstellerangabe über die benötigte Trockenluftmenge zur Trocknung von einem Kilogramm Material mit der angewandten Trocknungsmethode (Sollgasmenge) für das Material im jeweiligen Trocknungstrichter hinterlegt. Mittels dieser Daten berechnet die zentrale Steuerung die Stell- und Regelgrößen der Anordnung.

Mittels der Daten zum Volumen des dem jeweiligen Materialabscheiders zugeordneten Trocknungstrichters und zum Volumen des jeweiligen Trocknungstrichters wird die Anzahl der Fördervorgänge für eine komplette Befüllung des Trocknungstrichters ermittelt.

Selbstverständlich wird für die Trocknung von Schüttgut vorausgesetzt, dass das Schüttgut auch entsprechend der vom Hersteller spezifizierten Lagerbedingungen gelagert ist.

Ferner ist die Anordnung mit mehreren Kupplungsbahnhöfen versehen, so dass z.B aus einem Reservoir für Schüttgut mehrere der Trocknungstrichter mit Schüttgut versorgt werden können. Prinzipiell kann das Schüttgut aus jedem der Reservoirs auch jedem der Trocknungstrichter der Anordnung zugeführt werden.

Ein weiterer Vorteil der gegenwärtigen Erfindung ist die Trocknungsüberwachung der einzelnen Materialschichten, das Sperren der Materiallieferung zu den Verbrauchern bei Nichteinhaltung der Trocknungsparameter und die verbrauchsabhängige Regelung der Trocknungsparameter, was zu einer definierten Trocknung des Schüttguts bzw. zu einer Produktion mit hoher Qualität führt. Weitere Vorteile und vorteilhafte Ausgestaltungen der Erfindung sind Gegenstand der nachfolgenden Figuren sowie deren Beschreibungsteile.

Es zeigen im Einzelnen:

**Figur 1**   eine schematische Ansicht der erfindungsgemäßen Anordnung, wobei aus Gründen der Übersichtlichkeit nur ein Trocknungstrichter dargestellt ist;

**Figur 2**   eine schematische Ansicht der erfindungsgemäßen Anordnung mit einer Vielzahl von Trocknungstrichtern sowie deren Verschaltung, mit einem Trockengaserzeuger und einer zentralen Steuerung;

**Figur 3**   ein Ablaufdiagramm zur schematischen Darstellung des Verfahrens zum Entfeuchten von Schüttgut;

**Figur 4**   eine schematische Ansicht des oberen Bereichs eines Trocknungstrichters, der von oben her befüllt wird;

**Figur 5**   eine schematische Darstellung der im Trocknungstrichter ausgebildeten und zu unterschiedlichen Zeiten in den Trocknungstrichter gefüllten Schichten von Schüttgut;

**Figur 6**   eine mögliche Ausführungsform einer Startseite auf einem Display der Steuerung für die Anordnung zum Entfeuchten von Schüttgut;

**Figur 7**   eine mögliche Ausführungsform einer Eingabemaske für die in der Anordnung verarbeitbaren Materialien und deren Parameter hierzu;

**Figur 8**   eine mögliche Ausführungsform der graphischen Darstellung einer Gruppe von Trocknungstrichtern der Anordnung, auf dem Display der Steuerung;

**Figur 9**   eine mögliche Ausführungsform der graphischen Darstellung der aktuellen Status- und Messwerte eines der Trocknungstrichter;

**Figur 10**   eine mögliche Ausführungsform der graphischen Darstellung der Förderstatistik von Schüttgut eines ausgewählten Trocknungstrichters;

**Figur 11**   eine mögliche Ausführungsform der graphischen Darstellung der Auslastungs- und Temperaturübersicht eines Trocknungstrichters im Normalbetrieb; und

**Figur 12**   eine mögliche Ausführungsform der graphischen Darstellung der Auslastungs- und Temperaturübersicht eines Trocknungstrichters mit Stand-by-Phasen.

Für gleiche oder gleich wirkende Elemente der Erfindung werden identische Bezugszeichen verwendet. Das dargestellte Ausführungsbeispiel stellt lediglich eine Ausführungsform dar, wie die Anordnung bzw. das Verfahren ausgestaltet sein können, um einen definierten Soll-Feuchtegehalt für verschiedene mit der Anordnung zu verarbeitende Schüttgüter einzustellen. Obwohl sich die nachfolgende Beschreibung auf Schüttgüter aus Kunststoffgranulat bezieht, soll dies nicht als Beschränkung der Erfindung aufgefasst werden. Es ist für einen Fachmann selbstverständlich, dass mit der gegenwärtigen Erfindung auch granulatförmige Schüttgüter getrocknet bzw. definiert entfeuchtet werden können, die kein Kunststoffgranulat sind.

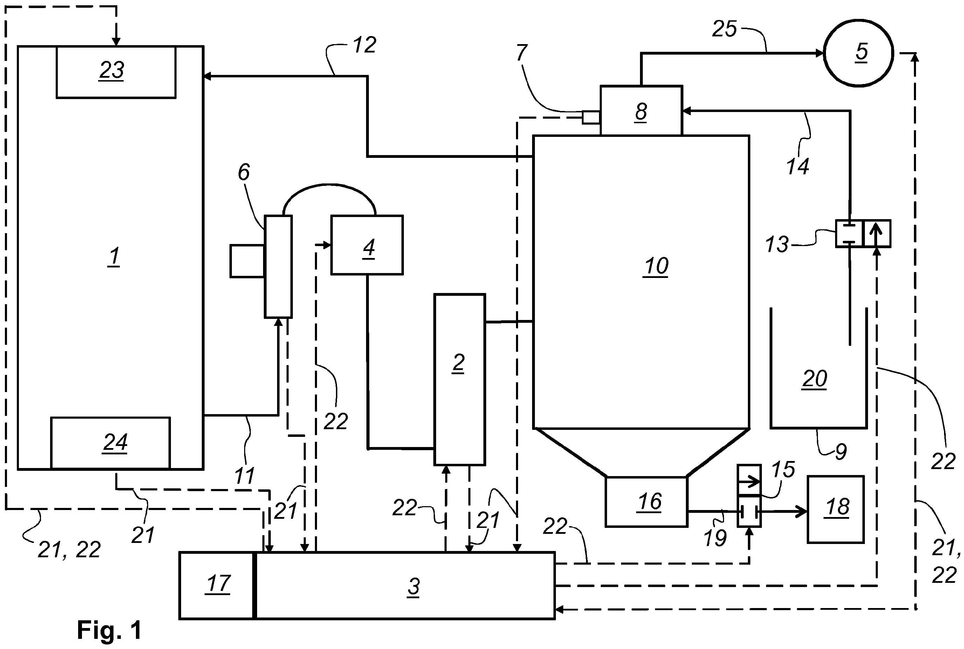

**Figur 1** zeigt eine schematische Ansicht der erfindungsgemäßen Anordnung, wobei aus Gründen der Übersichtlichkeit nur ein Trocknungstrichter 10 dargestellt ist. In der Regel umfassen die Anordnungen zum Entfeuchten von Schüttgut 20 aus Kunststoffgranulat mindestens einen Trocknungstrichter $10_1$, $10_2$, ..., $10_N$. In jedem der Trocknungstrichter $10_1$, $10_2$, ..., $10_N$ können unterschiedliche Arten von Schüttgut $20_1$, $20_2$, ..., $20_M$ (hier nicht dargestellt) aufbewahrt werden, die je nach Bedarf sortenrein oder als Gemisch aus mehreren Trocknungstrichtern $10_1$, $10_2$, ..., $10_N$ einem Verbraucher 18 (Spritzgießmaschine) zugeführt werden.

Wie aus der schematischen Darstellung der Figur 1 ersichtlich ist, ist der Trocknungstrichter 10 über eine erste Leitung 11 für eine Zufuhr von getrocknetem Gas aus einem Trockengaserzeuger 1 verbunden. Über eine zweite Leitung 12 kann das mit Feuchtigkeit beladene Gas aus dem Trocknungstrichter 10 abgeleitet und dem Trockengaserzeuger 1 zugeführt werden. Bevorzugt ist das für die Trocknung verwendete Gas herkömmliche Luft, die gegebenenfalls gereinigt sein kann.

Das getrocknete Gas aus einem Trockengaserzeuger 1 wird über einen Durchflusssensor 6, der in der ersten Leitung 11 zum Trocknungstrichter 10 vorgesehen ist, geführt. Eine Heizung 2 ist in der ersten Leitung 11 dem Trocknungstrichter 10 vorgeordnet. Zwischen dem Durchflusssensor 6 und der Heizung 2 ist eine Stellklappe 4 zum automatischen Einstellen der zum Trocknungstrichter 10 geführten Gasmenge vorgesehen. Der Durchflusssensor 6 ist über eine erste Kommunikationsverbindung 21 mit einer zentralen Steuerung 3 verbunden. Die zentrale Steuerung 3 liefert wiederum Steuersignale über eine zweite Kommunikationsverbindung 22 an die Stellklappe 4, um die dem Trocknungstrichter 10 zugeführte Gasmenge einzustellen.

Dem Trocknungstrichter 10 wird das Schüttgut aus einem Reservoir 9 zugeführt. Hierzu ist eine Unterdruckpumpe 5 mit einen Materialabscheider 8 verbunden. Eine Materialleitung 14 aus dem Reservoir 9 führt über ein Ventil 13 zum Materialabscheider 8. Das Ventil 13 ist über eine zweite Kommunikationsverbindung 22 mit der Steuerung 3 verbunden. Die Unterdruckpumpe 5 ist sowohl über eine erste Kommunikationsverbindung 21 als auch über eine zweite Kommunikationsverbindung 22 mit der Steuerung 3 verbunden.

Ein Füllstandsensor 7 ist dem Materialabscheider 8 des Trocknungstrichters 10 zugeordnet. Der Füllstandsensor 7 ist über eine erste Kommunikationsverbindung 21 mit der Steuerung 3 verbunden. Der Trocknungstrichter 10 hat einen Materialabsaugkasten 16, von dem aus das Schüttgut 20 mit einem definierten Feuchtegehalt über eine Ventil 15 einem Verbraucher 18 (z.B. ein Extruder) zugeführt wird. Das Ventil 15 ist über eine zweite Kommunikationsverbindung 22 mit der Steuerung 3 verbunden. Die erste Kommunikationsverbindung 21 und die zweite Kommunikationsverbindung 22 der Anordnung können drahtlos und/oder drahtgebunden ausgeführt sein. Für die Förderung in den Materialabscheider 8 wird ebenfalls im Speicher 17 der zentralen Steuerung eine maximale Förderzeit hinterlegt. Die festgelegte maximale Förderzeit reicht gut aus, um den Materialabscheider 8 zu füllen. Sollte innerhalb der maximalen Förderzeit kein Signal vom Füllstandsensor 7 erfolgen, ist dies ein Hinweis, dass bei der Förderung von Schüttgut bzw. Material in den Materialabscheider 8 eine Störung aufgetreten sein muss. Eine entsprechende Fehlermeldung wird dokumentiert.

Der zentralen Steuerung 3 ist ein Speicher 17 zugeordnet, in dem im Wesentlichen Daten zum Volumen eines jeden Trocknungstrichters 10, zum Volumen eines jeden Materialabscheiders 8 , zu Materialparametern des Schüttguts 20, wie z.B. Materialnummer, Materialname, Solltemperatur für das Material im jeweiligen Trocknungstrichter 10, zur minimalen Trocknungszeit für das Material im jeweiligen Trocknungstrichter 10 und zur Sollluftmenge für das Material im jeweiligen Trocknungstrichter 10 hinterlegt sind. Diese Daten können von der zentralen Steuerung 3 für Berechnungen abgerufen werden.

Mit der erfindungsgemäßen Anordnung kann die Gasmenge durch den jeweiligen Trocknungstrichter 10 geregelt und der Durchsatz des Schüttguts 20 überwacht werden. Die im jeweiligen Trocknungstrichter 10 benötigte Gasmenge wird über die Stellklappe 4 in der ersten Leitung 11 eingestellt. Die Regelgröße für die Stellklappe 4 wird mit der zentralen Steuerung 3 ermittelt. Zur Überwachung des Durchflusses der Gasmenge ist der Durchflusssensor 6 vorgesehen, der die ermittelten Daten an die Steuerung 3 liefert, die die Daten verarbeitet und dem Gasmengenregelkreis zuführt.

Ebenso kann mit der erfindungsgemäßen Anordnung der Durchsatz des Schüttguts 20 überwacht werden. Der Füllstandsensor 7, der am Materialabscheider 8 des Trocknungstrichters 10 vorgesehen ist, liefert ein Signal über die erste Kommunikationsverbindung 21 an die Steuerung 3, sobald die Soll-Fördermenge an Schüttgut 20 erreicht ist. Das Ventil 13 in der Materialleitung 14 kann mittels der Steuerung 3 gesteuert werden, wodurch ein Leersaugvorgang im Anschluss an den Fördervorgang, dem Transport von neuem Schüttgut 20 in den Trocknungstrichter 10, verhindert ist. Würde der Leersaugvorgang im Anschluss an den Förderprozess von Schüttgut 20 nicht verhindert werden, könnte man die in den Trocknungstrichter 10 gelangende Menge an Schüttgut 20 nicht genau bestimmen. Es würde auch Schüttgut 20 in den Materialabscheider 8 gelangen, das sich noch in der Materialleitung 14 befindet und dessen Menge nicht bestimmbar ist. Das Volumen des Förderprozesses kann für den Materialabscheider 8 in der zentralen Steuerung 3 hinterlegt und ausgewählt werden. Ebenso kann das Volumen des Trocknungstrichters 10 in der zentralen Steuerung 3 hinterlegt und ausgewählt werden. Diese Daten dienen als Grundlage zu Berechnung des Durchsatzes an Schüttgut 20.

Der Trockengaserzeuger 1 umfasst ein steuerbares Gebläse 23, das für eine vorgebbare Gasströmung (Luftströmung) im Trockengaserzeuger 1 sorgt und diese überwacht. Ferner ist ein Taupunkt- und Durchflusssensor 24 dem Trockengaserzeuger 1 zugeordnet, so dass dadurch die Funktion des Trockengaserzeugers 1 überwacht werden kann. Die zentrale Steuerung 3 ist über die erste Kommunikationsverbindung 21 und die zweite Kommunikationsverbindung 22 mit dem steuerbaren Gebläse 23 verbunden. Der Taupunkt- und Durchflusssensor 24 liefert über die erste Kommunikationsverbindung 21 Signale an die zentrale Steuerung 3.

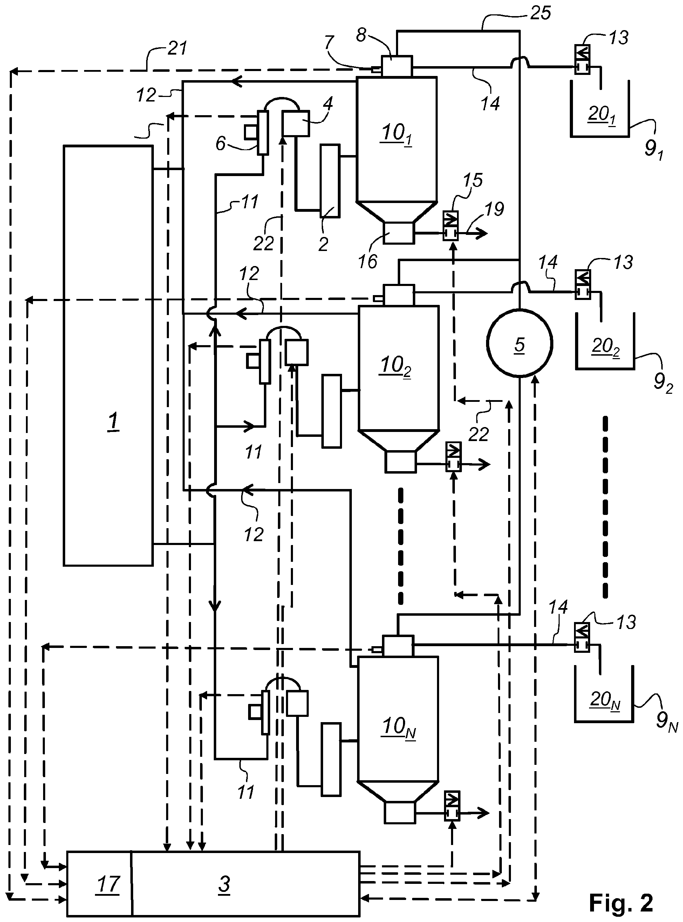

Eine schematische Ansicht einer gängigen Ausführungsform der erfindungsgemäßen Anordnung ist in **Figur 2** dargestellt. Hier sind im Gegensatz zur Darstellung der Figur 1 eine Vielzahl von Trocknungstrichtern $10_1$, $10_2$,..., $10_N$ mit dem mindestens einen Trockengaserzeuger 1 und der zentralen Steuerung 3 verschaltet. Die einzelnen Trocknungstrichter $10_1$, $10_2$,..., $10_N$ sind, wie bereits in Figur 1 gezeigt, mit einem Materialabscheider 8 und einem Materialabsaugkasten 16 verbunden. Jeder der Trocknungstrichter $10_1$, $10_2$,..., $10_N$ ist über eine erste Leitung 11 für eine Zufuhr von getrocknetem Gas aus einem Trockengaserzeuger 1 verbunden. Über eine zweite Leitung 12 kann das mit Feuchtigkeit beladene Gas aus jedem der Trocknungstrichter $10_1$, $10_2$,..., $10_N$ abgeleitet und dem Trockengaserzeuger 1 zugeführt werden. Der Übersicht halber werden nur die Elemente in der ersten Leitung 11 zum Trocknungstrichter $10_1$ beschrieben. Bei den übrigen Trocknungstrichtern $10_2$,..., $10_N$ sind die benötigten Elemente identisch. Das getrocknete Gas aus einem Trockengaserzeuger 1 wird über einen Durchflusssensor 6, der in der ersten Leitung 11 zum Trocknungstrichter $10_1$ vorgesehen ist, geführt. Eine Heizung 2 ist in der ersten Leitung 11 dem Trocknungstrichter $10_1$ vorgeordnet. Zwischen dem Durchflusssensor 6 und der Heizung 2 ist eine Stellklappe 4 zum automatischen Einstellen der zum Trocknungstrichter $10_1$ geführten Gasmenge vorgesehen. Der Durchflusssensor 6 ist über eine erste Kommunikationsverbindung 21 mit der zentralen Steuerung 3 verbunden.

Die zentrale Steuerung 3 liefert wiederum Steuersignale über eine zweite Kommunikationsverbindung 22 an die Stellklappe 4, um die dem Trocknungstrichter $10_1$ zugeführte Gasmenge einzustellen. Das Ventil 15 ist über eine zweite Kommunikationsverbindung 22 mit der Steuerung 3 verbunden. Der Füllstandsensor 7 ist dem Materialabscheider 8 des Trocknungstrichters $10_1$ zugeordnet und über die erste Kommunikationsverbindung 21 mit der Steuerung 3 verbunden.

Jedem der Trocknungstrichter $10_1$, $10_2$,..., $10_N$ wird aus einem jeweils zugeordneten Reservoir $9_1$, $9_2$,...,$9_N$ das Schüttgut $20_1$, $20_2$, ..., $20_M$ zugeführt. Zur Förderung des Schüttguts $20_1$, $20_2$, ..., $20_M$ aus den Reservoirs $9_1$, $9_2$,...,$9_M$ ist mit jedem Materialabscheider 8 der Trocknungstrichter $10_1$, $10_2$,..., $10_N$ eine Unterdruckpumpe 5 verbunden. In der Materialleitung 14 vom jeweiligen Reservoir $9_1$, $9_2$,...,$9_M$ ist ein Ventil 13 vorgesehen, mit dem der Transport von Schüttgut $20_1$, $20_2$, ..., $20_M$ aus dem Reservoir $9_1$, $9_2$,...,$9_M$ zum jeweiligen Materialabscheider 8 gesteuert werden kann. Das Ventil 13 ist mit der zentralen Steuerung 3 verbunden. Die Befüllung der Trocknungstrichter $10_1$, $10_2$,..., $10_N$ wird über den Füllstandsensor 7 am Materialabscheider 8 gesteuert. Somit kann gewährleistet werden, dass immer mit einem gestarteten Fördervorgang von Schüttgut $20_1$, $20_2$, ..., $20_M$ aus einem der Reservoirs $9_1$, $9_2$,...,$9_M$ eine komplette Auffüllung des Materialabscheider 8 des jeweiligen Trocknungstrichters $10_1$, $10_2$,..., $10_N$ erreicht wird. Wie bereits erwähnt, ist der Leersaugvorgang unterbrochen. Hierzu ist das mit der zentralen Steuerung 3 verbundene Ventil 13 und der Füllstandsensor 7 vorgesehen. Es ist für eine Steuerung der Anordnung wichtig, dass man genau und zuverlässig die Menge des im jeweiligen Trocknungstrichter $10_1$, $10_2$,..., $10_N$ befindlichen Schüttguts $20_1$, $20_2$, ..., $20_M$ kennt. Das Volumen des bei jedem Förderprozess geförderten Schüttguts $20_1$, $20_2$, ..., $20_M$ kann individuell in der Steuerung 3 bzw. dem der Steuerung 3 zugeordneten Speicher 17 hinterlegt und ausgewählt werden. Ebenso kann das Volumen für jeden Trocknungstrichter $10_1$, $10_2$,..., $10_N$ individuell in der Steuerung 3 bzw. dem der Steuerung 3 zugeordneten Speicher 17 hinterlegt und ausgewählt werden. Diese Daten dienen als Grundlage für die Berechnung des Durchsatzes von Schüttgut $20_1$, $20_2$, ..., $20_M$ bei den individuellen Trocknungstrichtern $10_1$, $10_2$,..., $10_N$. Zusätzlich kann für jeden Trocknungstrichter $10_1$, $10_2$,..., $10_N$ die Sorte des Schüttguts $20_1$, $20_2$, ..., $20_M$ ausgewählt werden. Die für die Sorte des Schüttguts $20_1$, $20_2$, ..., $20_M$ im Speicher 17 der Steuerung 3 hinterlegten Trocknungsparameter werden von der Steuerung 3 aus einer im Speicher 17 hinterlegten Materialdatenbank ausgelesen. Diese Daten werden ebenfalls für die Berechnung des Durchsatzes von dem Schüttgut $20_1$, $20_2$, ..., $20_M$ berücksichtigt.

Mit Hilfe der vorhandenen Daten der Volumina von Materialabscheider 8 und den jeweiligen Trocknungstrichtern $10_1$, $10_2$,..., $10_N$ wird die Anzahl der Fördervorgänge für eine komplette Befüllung der jeweiligen Trocknungstrichter $10_1$, $10_2$,..., $10_N$ ermittelt. Die Zeiträume zwischen den einzelnen Fördervorgängen für jeden der Trocknungstrichter $10_1$, $10_2$,..., $10_N$ werden erfasst, aufgezeichnet und zur Berechnung der Gesamtzeit verwendet. Durch die vorhandenen Daten kann die Auslastung der jeweiligen Trocknungstrichter $10_1$, $10_2$,..., $10_N$ und der Materialdurchsatz der jeweiligen Trocknungstrichter $10_1$, $10_2$,..., $10_N$ berechnet werden.

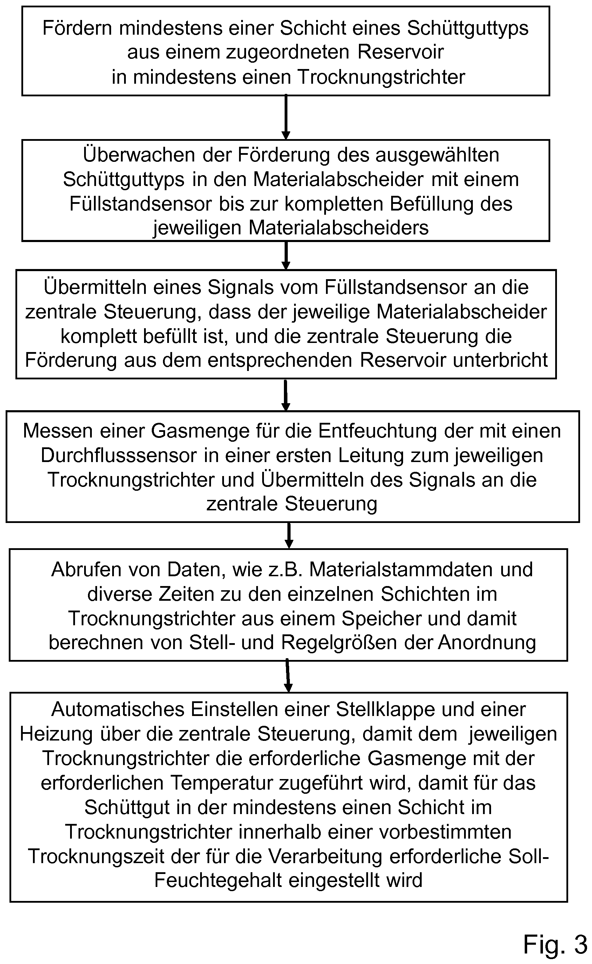

**Figur 3** zeigt in schematischer Darstellung ein Ablaufdiagramm des erfindungsgemäßen Verfahrens zum Entfeuchten von Schüttgut $20_1$, $20_2$, ..., $20_M$, insbesondere Kunststoff, in den verschiedenen Trocknungstrichtern $10_1$, $10_2$,..., $10_N$. Um ein effektives und reproduzierbares Entfeuchten zu erreichen, muss die Gasmenge (Luftmenge) durch die jeweiligen Trocknungstrichter $10_1$, $10_2$,..., $10_N$ geregelt werden. Ebenso werden Toleranzgrenzen der Gasmenge automatisch von der Anordnung in Abhängigkeit von der Menge des zu entfeuchtenden Schüttguts $20_1$, $20_2$, ..., $20_M$ im jeweiligen Trocknungstrichter $10_1$, $10_2$,..., $10_N$ festgelegt.
Bei einer:

Sollgasmenge $\geq 30$ m$^3$/h beträgt die Toleranzgrenze $\pm$ 1,5 m$^3$/h;
Sollgasmenge $\geq 20$ m$^3$/h beträgt die Toleranzgrenze $\pm$ 1,3 m$^3$/h;
Sollgasmenge $\geq 15$ m$^3$/h beträgt die Toleranzgrenze $\pm$ 1,1 m$^3$/h;
Sollgasmenge $\geq 10$ m$^3$/h beträgt die Toleranzgrenze $\pm$ 0,8 m$^3$/h; und
Sollgasmenge $< 10$ m$^3$/h beträgt die Toleranzgrenze $\pm$ 0,5 m$^3$/h.

Von der Steuerung 3 erfolgt ein Signal zum Öffnen oder Schließen der Stellklappe 4, wenn eine Abweichung außerhalb der Toleranzgrenzen um $\pm$ 0,1 m$^3$/h festgestellt wird. Die Regelung der Stellklappe 4 in der ersten Leitung 11 zu dem jeweiligen Trocknungstrichter $10_1$, $10_2$,..., $10_N$ erfolgt alle zwei Minuten. Dies dient besonders zur Schonung der Stellklappen 4 und der damit verknüpften Mechanik.

Bei einer Meldung "OFEN AUS" wird nach 30 Minuten die Stellklappe 4 zu dem jeweiligen Trocknungstrichter $10_1$, $10_2$,..., $10_N$ geschlossen. Als "OFEN" wird der Trocknungstrichter $10_1$, $10_2$,..., $10_N$ mit der ihm zugeordneten Heizung 2 und dem Materialabscheider 8 bezeichnet.

Um kurzfristige Abweichungen der gemessenen Signale außerhalb der Toleranzgrenzen nicht in die Regelung mit einfließen zu lassen, erscheint eine Fehlermeldung erst nach einer vordefinierten Zeitspanne. Diese Zeitspanne kann z.B. 5 Minuten betragen. Die Überwachung der Gasmenge ist deaktiviert, wenn der jeweilige Trocknungstrichter $10_1$, $10_2$,..., $10_N$ in Standby-Betrieb ist.

Ebenso wird die Temperatur in der Anordnung überwacht. Wenn die Ist-Temperatur eine Soll-Temperatur von $\geq 25°C$ überschreitet, erscheint sofort die Fehlermeldung "Übertemperatur" und es wird die Heizung 2 für den jeweiligen Trocknungstrichter $10_1$, $10_2$,..., $10_N$ abgeschaltet. Diese Maßnahme dient insbesondere dem Brandschutz. Die Toleranzgrenze der Solltemperatur beträgt $\pm 5°C$. Wenn die Ist-Temperatur länger als eine vordefinierte Zeitspanne außerhalb der Toleranzgrenze liegt, erscheint eine Fehlermeldung. Die Fehlermeldung lautet "Übertemperatur" bzw. "Untertemperatur". Es erfolgt aus Sicherheitsgründen die Abschaltung der Heizung 2, denn es könnte auch ein elektrischer Defekt vorliegen, der zu der Fehlermeldung "Übertemperatur" führt. Diese Zeitspanne kann z.B. 15 Minuten betragen. Falls eine Temperaturabsenkung erforderlich ist, wird die Fehlermeldung "Übertemperatur" deaktiviert, bis die Ist-Temperatur die Soll-Temperatur, auf die abgesenkt werden soll, erreicht hat. In diesem Zeitraum beträgt die Einschaltdauer der Heizung 0%.

Eine Vielzahl von Berechnungen wird mit der zentralen Steuerung 3 durchgeführt. Die für die Berechnung erforderlichen Daten sind in der der zentralen Steuerung 3 zugeordneten Datenbank 17 abgelegt.

Bei der Anordnung zum Entfeuchten von Schüttgut $20_1$, $20_2$,...$20_M$ muss der maximal erlaubte Durchsatz an Schüttgut $20_1$, $20_2$,...$20_M$ pro Trocknungstrichter $10_1$, $10_2$,..., $10_N$ berechnet werden. Für den Trocknungstrichter $10_1$ errechnet sich der Durchsatz an Schüttgut $20_1$ wie folgt:

$$M_{Max} = \frac{V}{t_{min}}$$

dabei ist:

$M_{MAX}$ der maximal erlaubte Durchsatz an Schüttgut $20_1$, $20_2$,...$20_M$ in Liter/Std. pro Trocknungstrichter $10_1$, $10_2$,..., $10_N$;
$V$ das Volumen des Trocknungstrichters $10_1$, $10_2$,..., $10_N$; und
$t_{min}$ die minimale Trocknungsdauer für das Schüttgut $20_1$, $20_2$,...$20_M$.

$$M(t) = F \times V_{Mat}$$

Dabei ist:

$M(t)$ der Durchsatz an Schüttgut $20_1$, $20_2$,...$20_M$ in Liter/Std.;
$F$ die Anzahl der Förderzyklen pro Stunde für jeden Trocknungstrichter $10_1$, $10_2$,..., $10_N$; und
$V_{Mat}$ das Volumen eines jeden Trocknungstrichters $10_1$, $10_2$,..., $10_N$ zugeordneten Materialabscheiders 8.

Die Auslastung der Trocknungstrichter $10_1$, $10_2$,..., $10_N$ ist wichtig, damit für die Verarbeitung von optimal getrocknetem Schüttgut $20_1$, $20_2$,...$20_M$ aus dem Trocknungstrichter $10_1$, $10_2$,..., $10_N$ dieses auch immer ausreichend mit der erforderlichen Qualität zur Verfügung steht.

$$R_{TT} = \frac{M(t)}{M(t)_{max}}$$

dabei ist:

$R_{TT}$ die Auslastung eines jeden Trocknungstrichters $10_1$, $10_2$,..., $10_N$ in %; und
$M(t)_{max}$ der maximal erlaubte Materialdurchsatz für jeden Trocknungstrichter $10_1$, $10_2$,..., $10_N$ in Liter/Std.

Ebenso ist es wichtig, die Soll-Gasmenge zu bestimmen, die durch jeden der Trocknungstrichter $10_1$, $10_2$,..., $10_N$ geleitet werden muss, um die geforderte Trocknung des Schüttguts $20_1$, $20_2$,...$20_M$ im jeweiligen Trocknungstrichter

$10_1$, $10_2$,..., $10_N$ zu erreichen.

$$SL = SL_H \times M(t) \times f_{\delta Mat}$$

dabei ist:

$SL$ die Soll-Gasmenge, die erforderlich ist, um die erforderliche Trocknung des Schüttguts $20_1$, $20_2$,...$20_M$ zu erreichen;

$SL_H$ ist die Herstellerangabe der Soll-Gasmenge für den Typ des Schüttguts $20_1$, $20_2$,...$20_M$, das sich im Trocknungstrichter $10_1$, $10_2$,..., $10_N$ befindet; und

$f_{\delta Mat}$ ein Faktor der Dichte, mit der das Schüttgut $20_1$, $20_2$,...$20_M$ im jeweiligen Trocknungstrichter $10_1$, $10_2$,..., $10_N$ geschichtet ist.

Ferner ist die Zeitdauer bzw. der Zeitpunkt festzustellen, wann die Freigabe des Materials aus dem jeweiligen Trocknungstrichter $10_1$, $10_2$,..., $10_N$ erfolgen kann.

$$t_{Frei} = t_{min} - t_{Gesamt}$$

dabei ist:

$t_{Frei}$ die Zeitdauer, bei der die Freigabe des Schüttguts $20_1$, $20_2$,...$20_M$ im jeweiligen Trocknungstrichter $10_1$, $10_2$,..., $10_N$ erfolgen kann; und

$t_{Gesamt}$ die Gesamtzeit aus der Statistik, die erforderlich ist, um bei einem komplett gefüllten Trocknungstrichter $10_1$, $10_2$,..., $10_N$ die für die Verarbeitung des Schüttguts $20_1$, $20_2$,...$20_M$ erforderliche Feuchte einzustellen.

Besonders wichtig bei der Steuerung und Regelung der Anordnung zum Entfeuchten von Schüttgut aus Kunststoff ist der Einfluss der verschiedenen Funktionszustände der jeweiligen Trocknungstrichter $10_1$, $10_2$,..., $10_N$.

Die Funktionsweise des jeweiligen Trocknungstrichters $10_1$, $10_2$,..., $10_N$ gestaltet sich derart, dass nach dem Einschalten der Heizung 2 oder einem Wechsel des Schüttguts $20_1$, $20_2$,...$20_M$ im jeweiligen Trocknungstrichter $10_1$, $10_2$,..., $10_N$ die Materialfreigabe zur Verarbeitung gesperrt ist. Es erscheint auch eine Fehlermeldung "Materialmangel", wenn nach der maximalen Förderzeit kein Signal vom Füllstandsensor 7 des Materialabscheiders 8 des jeweiligen Trocknungstrichters $10_1$, $10_2$,..., $10_N$ an der zentralen Steuerung 3 eingeht.

Die Funktion "Leersaugen" der Materialleitung 14 wird für drei verschiedene Situationen gestartet, wie zum Beispiel wenn ein Trocknungstrichter $10_1$, $10_2$,..., $10_N$ ausgeschaltet wird, wenn der Typ des Schüttguts $20_1$, $20_2$,...$20_M$ im jeweiligen Trocknungstrichter $10_1$, $10_2$,..., $10_N$ geändert wird, oder wenn eine Taste (nicht dargestellt) "Leersaugen" manuell betätigt wird. Die manuelle Betätigung ist immer dann wichtig, wenn die Materialleitungen 14 aus dem jeweiligen Reservoir $9_1$, $9_2$,...,$9_M$ gereinigt werden. Die ist vor allem auch dann wichtig, wenn ein neuer Typ an Schüttgut $20_1$, $20_2$,...$20_M$ in den jeweiligen Trocknungstrichter $10_1$, $10_2$,..., $10_N$ eingebracht werden soll.

Wenn das Schüttgut $20_1$, $20_2$,...$20_M$ aus dem dem jeweiligen Trocknungstrichter $10_1$, $10_2$,..., $10_N$ zugeordneten jeweiligen Reservoir $9_1$, $9_2$,...,$9_M$ gefördert wird, wird die Förderung solange durchgeführt, bis ein Signal vom Füllstandsensor 7 an die zentrale Steuerung 3 geliefert wird. Das Signal zeigt an, dass der entsprechende Trocknungstrichter $10_1$, $10_2$,..., $10_N$ wieder voll befüllt ist.

Ebenso wurde die Funktion des "Leersaugens" der Materialleitung 14 deaktiviert. Dies stellt sicher, dass in den Materialabscheidern 8 der jeweiligen Trocknungstrichter $10_1$, $10_2$,..., $10_N$ immer gleiche Füllstände erreicht werden. Um exakt die von dem Füllstandsensor 7 gemessenen Füllhöhen in den Materialabscheidern 8 der entsprechenden Trocknungstrichter $10_1$, $10_2$,..., $10_N$ zu erhalten, wird das in der Materialleitung 14 verbleibende Schüttgut $20_1$, $20_2$,...$20_M$ nicht in den Materialabscheider 8 des entsprechenden Trocknungstrichters $10_1$, $10_2$,..., $10_N$ gefördert. Das in der Materialleitung 14 verbleibende Schüttgut $20_1$, $20_2$,...$20_M$ kann anderweitig abgesaugt werden und wird z. B. beim darauffolgenden Förderprozess in den Materialabscheider 8 gefördert.

Bei der Förderung von Schüttgut $20_1$, $20_2$,...$20_M$ in den entsprechenden Trocknungstrichter $10_1$, $10_2$,..., $10_N$ werden pro Fördervorgang vier Zeiten aufgezeichnet, nämlich:

"Letzter Fördervorgang vor";
"Dauer des letzten Fördervorgangs";
"Dauer des letzten Standby-Vorgangs"; und
"Fehler".

In der Fehlerstatistik werden maximal 25 Zeiten erfasst. Aus den erfassten Zeiten wird, abhängig von der Größe der entsprechenden Trocknungstrichter $10_1$, $10_2$,..., $10_N$, die jeweilige Gesamt- und Durchschnittszeit berechnet. Falls ein Trocknungstrichter $10_1$, $10_2$,..., $10_N$ ausgeschaltet wird, wird die Zeit für "letzter Fördervorgang vor" auf null gesetzt. Bei einer Auslastung eines oder mehrerer der Trocknungstrichter $10_1$, $10_2$,..., $10_N$ unter 90%, kann die Temperatur, mit der die Gasmenge dem jeweiligen Trocknungstrichter $10_1$, $10_2$,..., $10_N$ zugeführt wird, für eine bestimmte Zeit gesenkt werden. Dadurch werden Stromspitzen im Betrieb vermieden. Hierzu wird ein Signal an einem Stromübergabepunkt (nicht dargestellt) vom Energieversorgungsunternehmen (EUV) abgegriffen. Die Leistung der Heizung 2 kann dann in Abstimmung mit der zentralen Steuerung 3 heruntergefahren werden. Dies führt zu einer Stromeinsparung im Betrieb.

Falls im Zeitraum der "minimalen Trocknungszeit" und der "Zeit Heizung absenken" kein Fördervorgang aktiv war, wird die Absenkung der Temperatur der dem jeweiligen Trocknungstrichter $10_1$, $10_2$,..., $10_N$ zugeführten Gasmenge aktiviert.

Mittels der zentralen Steuerung 3 erfolgt die Freigabe des Schüttguts $20_1$, $20_2$,...$20_M$ aus dem jeweiligen Trocknungstrichter $10_1$, $10_2$,..., $10_N$ an den Verbraucher 18 (Spritzgießmaschine). Von der zentralen Steuerung 3 wird das Ventil 15 in einer Materialleitung 19 (siehe Figur 1 oder Figur 2) vom Materialabsaugkasten 16 zum Verbraucher 18 in entsprechender Weise angesteuert. Die Freigabe erfolgt unter den folgenden Bedingungen:

Gesamtzeit > minimale Trocknungsdauer;
die der Temperatur der Vorgabe entspricht;
die der Gasmenge durch den jeweiligen Trocknungstrichter $10_1$, $10_2$,..., $10_N$ der Vorgabe entspricht;
der Durchsatz an Schüttgut $20_1$, $20_2$,..., $20_M$ ist < 100%; oder
es ist kein neuer Typ des Schüttgut $20_1$, $20_2$,..., $20_M$ im Zeitraum der minimalen Trocknungsdauer ausgewählt worden.

Ein Entzug der Freigabe des Schüttguts $20_1$, $20_2$,..., $20_M$ an den bzw. die Verbraucher 18 erfolgt unter den folgenden Bedingungen:

der Durchsatz an Schüttgut $20_1$, $20_2$,..., $20_M$ ist > 100%;
der entsprechende Trocknungstrichter $10_1$, $10_2$,..., $10_N$ ist aus; oder
ein Wechsel des Typs des Schüttguts $20_1$, $20_2$,..., $20_M$ im entsprechenden Trocknungstrichter $10_1$, $10_2$,..., $10_N$ wurde durchgeführt.

Falls von der zentralen Steuerung 3 ein Fehler in der Anordnung festgestellt wird, wird die Fehlerzeit dokumentiert und von der Trocknungszeit für das Schüttgut $20_1$, $20_2$,..., $20_M$ in den entsprechenden Trocknungstrichtern $10_1$, $10_2$,..., $10_N$ abgezogen. Bei einem Wechsel der entsprechenden Trocknungstrichter $10_1$, $10_2$,..., $10_N$ in den Stand-by-Modus, wird die Fehlerzeit angehalten und der Standby-Zeit zugerechnet. Von nun an wird die Standby-Zeit gemessen. Zur Berechnung der tatsächlichen Gesamttrocknungszeit werden von der gemessenen Trocknungszeit die Fehlerzeit und die Stand-by-Zeit subtrahiert. Im Standby-Modus erfolgt keine Anzeige von Fehlern. Der Fehler "Luftmenge zu hoch" kann deaktiviert werden. Die Fehlermeldung ist nicht deaktiviert, falls dem Trockengaserzeuger 1 ein steuerbares Gebläse 23 (siehe Figur 1) zugeordnet ist. Mit dem steuerbaren Gebläse 23 kann die den Trocknungstrichtern $10_1$, $10_2$,..., $10_N$ zuzuführende Gasmenge den Anforderungen entsprechend eingestellt werden.

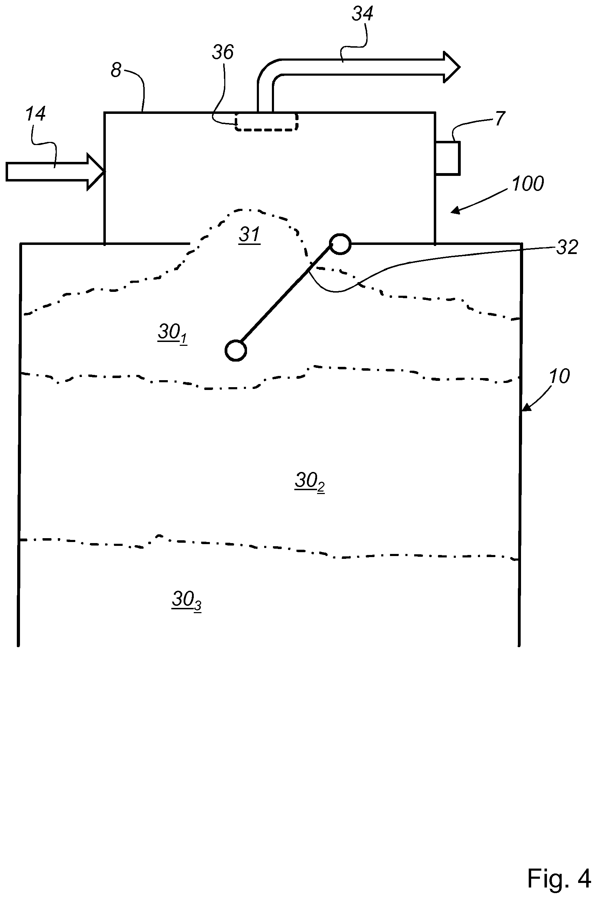

**Figur 4** zeigt eine schematische Ansicht des oberen Bereichs 100 eines Trocknungstrichters 10, der von oben her befüllt wird. Mittels der mindestens einen Unterdruckpumpe 5 (siehe Figur 1) wird an den Materialabscheider 8 ein Unterdruck angelegt. Hierzu ist die Unterdruckpumpe 5 über eine Leitung 34 mit dem Materialabscheider 8 verbunden. Das Ende der Leitung 34 am Materialabscheider 8 ist durch einen Filter 36 abgedeckt, um zu verhindern, dass Schüttgut 20 in die Leitung 34 gesaugt wird. Das Schüttgut 20 gelangt über die Materialleitung 14 in den Materialabscheider 8. Eine schwenkbare Materialklappe 32 trennt den Materialabscheider 8 vom Volumen des Trocknungstrichters 10. Der dem Materialabscheider 8 zugeordnete Füllstandsensor 7 überwacht die Befüllung des Materialabscheiders 8 mit Schüttgut 20. Wenn sich kein Schüttgut 20 im Materialabscheider 8 befindet, ist die Materialklappe 32 zum Trocknungstrichter 10 hin geschlossen. Dies bedeutet auch, dass wieder Schüttgut 20 in den Materialabscheider 8 gefördert wird, um immer eine komplette Befüllung des Trocknungstrichters 10 gewährleisten zu können. Wenn die Sollmenge an Schüttgut 20 im Materialabscheider 8 erreicht ist, öffnet die Materialklappe 32 durch einen Abfall des erzeugten Unterdrucks aufgrund der Beendigung des Förderzyklus und das Schüttgut 20 gelangt in den Trocknungstrichter 10, und die erste bzw. oberste Schicht $30_1$ bildet sich aus. Ein Schüttkegel 31 reicht dabei noch in den Materialabscheider 8 hinein, der aber bei Entnahme des nach Sollbedingungen getrockneten Schüttguts 20 aus dem Materialabsaugkasten 16 (siehe Figur 1) eingeebnet wird. Nachdem der Schüttkegel 31 eingeebnet ist, schließt die Materialklappe 32 und die nächste Befüllung des Materialabscheiders 8 kann beginnen.

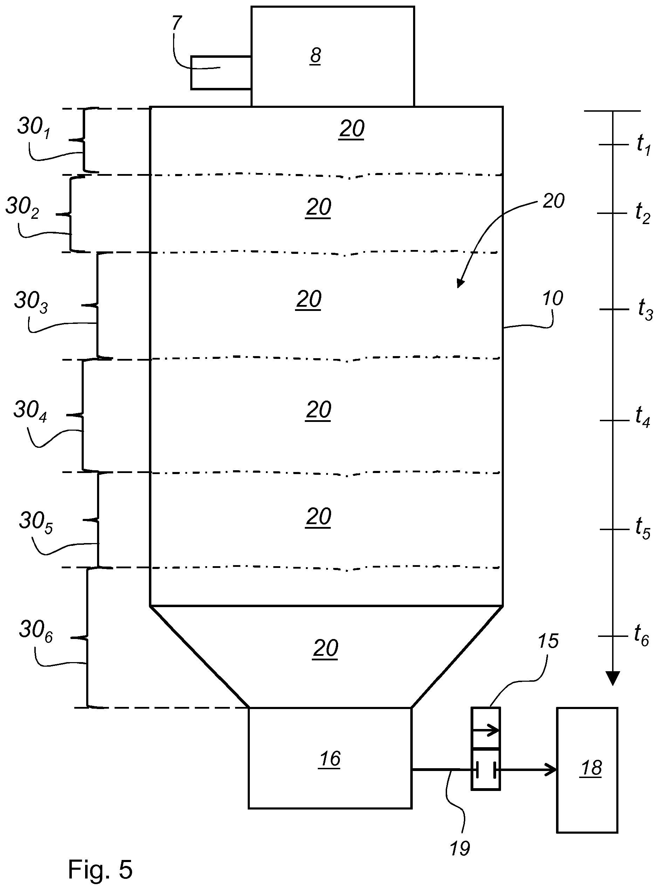

Wie aus der schematischen Darstellung eines Trocknungstrichters 10 der **Figur 5** zu entnehmen ist, sind im Trocknungstrichter 10 mehrere Schichten $30_1$, $30_2$, ..., $30_K$ des Schüttguts 20 ausgebildet, die zu unterschiedlichen Zeiten in den Trocknungstrichter 10 gefüllt wurden. Bei der hier beschriebenen Darstellung sind sechs Schichten $30_1$, $30_2$, ..., $30_6$ im Trocknungstrichter 10 vorgesehen. Die soll nicht als Beschränkung der Erfindung aufgefasst werden. Die Ausbildung der sechs Schichten $30_1$, $30_2$, ..., $30_6$ des Schüttguts 20 resultiert daraus, dass das Schüttgut 20, welches die erforderliche Feuchte hat, aus dem Trocknungstrichter 10 entnommen und an einen Verbraucher 18 übergeben wird. Parallel dazu wird weiteres Schüttgut 20 in den Materialabscheider 8 gefördert, damit der Trocknungstrichter 10 immer komplett gefüllt ist. In der Regel ist die Menge der Entnahme von Schüttgut 20 kleiner als das Gesamtvolumen des Trocknungstrichters 10. Über den Materialabscheider 8 wird mittels der Unterdruckpumpe 5 Schüttgut 20 aus dem Reservoir 9 (siehe Figur 1) nachgeliefert. Der Förderzyklus in dem Materialabscheider 8 läuft solange, bis der Füllstandsensor 7 die Soll-Befüllung des Materialabscheiders 8 meldet. Das aus dem Trocknungstrichter 10 für den Verbraucher 18 entnommene Schüttgut 20 wird somit in gleichem Maße von oben über den Materialabscheider 8 in den Trocknungstrichter 10 gefüllt. Es ist für einen Fachmann selbstverständlich, dass die einzelnen Schichten $30_1$, $30_2$,..., $30_6$ als Schichten zu verstehen sind, die zu unterschiedlichen Zeiten in den Trocknungstrichter 10 gefüllt wurden. Die einzelnen Schichten $30_1$, $30_2$,..., $30_6$ bestehen immer aus dem gleichen Typ des Schüttguts 20. Falls der Typ des Schüttguts im Trocknungstrichter 10 ausgetaucht werden soll, wird der komplette Trocknungstrichter 10 mit einem neuen Typ des Schüttguts 20 befüllt.

Falls nun ein Fördervorgang abgeschlossen ist, wird im Fehlerfall die Fehlerzeit neu gestartet. Die vorangegangene Fehlerzeit wird dem zugehörigen Fehlerzyklus zugerechnet. Dies bedeutet, dass jede im Trocknungstrichter 10 ausgebildete Schicht $30_1$, $30_2$,..., $30_6$ ihre Fehlerzeit mitzieht. Ferner ist ein Heizungsschutz vorgesehen. Von der zentralen Steuerung 3 wird die Heizung 2 erst nach einer minimalen Gasströmung durch den Trocknungstrichter 10 von $2,5 m^3/h$ freigegeben.

Um die Parameter für die Trocknung bzw. Entfeuchtung des Schüttguts 20 im Trocknungstrichter 10 zu berechnen, sind in der Datenbank 17 die folgenden Daten für die Berechnung hinterlegt: Volumen des Materialabscheiders 8 , Volumen des Trocknungstrichters 10, die maximale Förderzeit (nicht wichtig für den Prozess der Trocknung), die Zeit zum Leersaugen der Materialleitung 14 (nicht wichtig für den Prozess der Trocknung), Förderzeit (nicht wichtig für den Prozess der Trocknung), das Reservoir 9, aus dem der Typ des Schüttguts 20 entnommen wurde (nicht wichtig für den Prozess der Trocknung) und der Typ des Schüttguts 20. Es ist für einen Fachmann selbstverständlich, dass die oben aufgeführte Aufzählung nicht abschließend ist und bei Bedarf weitere Parameter hinzugefügt oder bereits vorhandene Parameter weggelassen werden können.

Die unterschiedlichen Parameter für die unterschiedlichen Typen des Schüttguts 20 (Kunststoff) sind ebenfalls in der Datenbank 17 hinterlegt. Die Datenbank 17 für das Schüttgut 20 umfasst die folgenden Parameter: die Materialnummer, den Materialnamen, die Soll-Temperatur für die Trocknung (wichtig), das Temperaturfenster (Bandbreite der Abweichung von der Soll-Temperatur), die minimale Trocknungszeit (wichtig), die Absenktemperatur, die Soll-Gasmenge, die dem Trocknungstrichter 10 zugeführt wird (wichtig), das Absenken der Heizung 2 auf einen vorbestimmten Wert und der Materialcode. Es ist für einen Fachmann selbstverständlich, dass die oben aufgeführte Aufzählung nicht abschließend ist und bei Bedarf weitere Parameter hinzugefügt oder bereits vorhandene Parameter weggelassen werden können.

Ebenso ist bei dem erfindungsgemäßen Verfahren eine Sicherheit vor Bedienfehlern eingebaut. Anhand der Materialnummer werden die notwendigen Parameter für die Trocknung des Schüttguts 20 automatisch dem Trocknungstrichter 10 zugewiesen, in dem sich das zu trocknende Schüttgut 20 befindet. Bei der Befüllung der Trocknungstrichters 10 erfolgt eine automatische Zuordnung zwischen dem Reservoir 9, aus dem das Schüttgut 20 entnommen worden ist, und dem Trocknungstrichter 10, dem das Schüttgut 20 zugeführt worden ist.

Ebenso kann in der Datenbank 17 eine Archivierung (u.a. für Reklamationen, Qualitätssicherung, etc.) vorgenommen werden. Die für die Archivierung vorgesehen Werte sind z.B. die Ist-Temperatur der dem Trocknungstrichter 10 zugeführten Gasmenge, die Auslastung der Heizung 2 des Trocknungstrichters 10 sowie Fehler und Warnmeldungen der Anordnung bzw. der Trocknungstrichter 10. Es ist für einen Fachmann selbstverständlich, dass die oben aufgeführte Aufzählung nicht abschließend ist und bei Bedarf weitere Werte hinzugefügt oder bereits vorhandene Werte weggelassen werden können.

Ferner besteht die Möglichkeit, dass die Anordnung zum Entfeuchten von Schüttgut 20 über einen am Office-Netz angeschlossenen PC mittels einer mit Passwort geschützten Fernbedienung bedienbar ist.

In **Figur 5** ist beispielhaft ein Trocknungstrichter 10 dargestellt, der vollkommen mit Schüttgut 20 befüllt ist. Bei dem hier dargestellten Beispiel der Befüllung ist das Schüttgut 20 in sechs Schichten $30_1$, $30_2$,..., $30_6$ im Trocknungstrichter 10 geschichtet. Es ist für einen Fachmann selbstverständlich, dass sich mehr oder weniger als die sechs Schichten $30_1$, $30_2$,..., $30_6$ im Trocknungstrichter 10 befinden können. Die Darstellung der Figur 4 ist keinesfalls als Beschränkung der Erfindung aufzufassen.

Jeder der in der Anordnung zum Entfeuchten vorgesehene Trocknungstrichter $10_1$, $10_2$,..., $10_N$ wird mit Schüttgut 20 gleichen Typs befüllt. Die unterschiedlichen Schichten $30_1$, $30_2$,..., $30_6$ unterscheiden sich dadurch, dass das Schüttgut 20 zu unterschiedlichen Zeiten in den Trocknungstrichter 10 gefüllt worden ist. Die unterste Schicht $30_6$ wurde zum Zeitpunkt $t_6$ in den Trocknungstrichter 10 gefüllt und ist somit am längsten im Trocknungstrichter 10. Die oberste

Schicht $30_1$ wurde zum Zeitpunkt $t_1$ in den Trocknungtrichter 10 gefüllt und ist somit am kürzesten im Trocknungtrichter 10. Die Befüllung des Trocknungtrichters 10 in Schichten $30_1$, $30_2$,..., $30_6$ resultiert daraus, dass das für einen Spritzgießvorgang mit dem Verbraucher 18 verbrauchte Schüttgut 20 über den Materialabsaugkasten 16 entnommen wird. Die Menge des entnommenen Schüttguts 20 wird von der zentralen Steuerung 3 protokolliert. Entsprechend der aus dem Trocknungtrichter 10 entnommenen Menge an Schüttgut 20 wird die Menge über den Materialabscheider 8 wieder von oben her dem Trocknungtrichter 10 zugeführt.

Die zentrale Steuerung 3 kennt über den Durchsatz des Verbrauchers 18 (Förderung von Schüttgut 20 aus dem Trocknungtrichter 10) und die zeitlich unterschiedlichen Zyklen der Befüllung des jeweiligen Trocknungtrichters 10, die Verweildauer und die Schüttgutmenge der einzelnen Schichten $30_1$, $30_2$,..., $30_6$ im Trocknungtrichter 10. Ebenso wird durch die zentrale Steuerung 3 aufgrund der Verweildauer der einzelnen Schichten $30_1$, $30_2$,..., $30_6$ im Trocknungtrichter 10, der Fehlerzeiten (z.B. keine Zufuhr von Gas zur Entfeuchtung des Schüttguts 20; Dauer des Ausfalls der Heizung) und der Zeit, mit der die einzelnen Schichten $30_1$, $30_2$,..., $30_6$ im Trocknungtrichter 10 der Gasmenge zum Entfeuchten ausgesetzt waren, erkannt, ob die unterste Schicht $30_6$ die für die Entfeuchtung erforderliche Verweildauer im Trocknungtrichter 10 hat und ob diese Schicht $30_6$ der erforderlichen Soll-Gasmenge zum Entfeuchten ausgesetzt war. Nur wenn diese Vorgaben erfüllt sind, kann eine Freigabe der untersten Schicht $30_6$ im Trocknungtrichter 10 zur Verarbeitung gegeben werden. Die erfassten Fehlerzeiten werden bei der Wanderung der Schichten $30_1$, $30_2$,..., $30_6$ im Trocknungtrichter 10 von oben nach unten mitgenommen. Jede der Schichten $30_1$, $30_2$,..., $30_6$ hat Ihre eigene Fehlerzeit. Selbiges gilt auch für etwaige Standby-Zeiten.

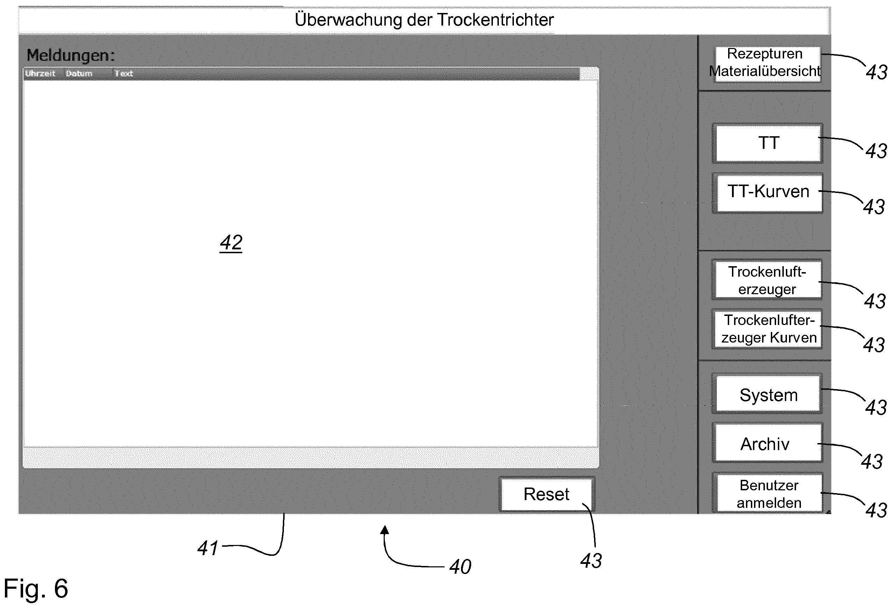

Der zentralen Steuerung 3 ist für Benutzereingaben und zur Visualisierung des Status und der Betriebsparameter der einzelnen Trocknungtrichter $10_1$, $10_2$,..., $10_N$ der Anordnung ein Display 40 zugeordnet. Es ist für einen Fachmann selbstverständlich, dass verschiedene Eingabemöglichkeiten für das Display 40 realisiert werden können (zum Beispiel: Touchscreen, Tastatur und Maus, Joystick etc.). **Figur 6** zeigt eine mögliche Ausführungsform einer Startseite 41 auf dem Display 40 der Steuerung 3 der Anordnung zum Entfeuchten von Schüttgut 20. In einem Fenster 42 der Startseite 41 können für den Benutzer mehrere Meldungen angezeigt werden. Die Meldungen sind nach Uhrzeit und Datum sortiert und enthalten Text der Meldung und/oder eine Beschreibung des zu meldenden Fehlers, der bei der Überwachung der Trocknungtrichter $10_1$, $10_2$,..., $10_N$ aufgetreten ist. Ebenso umfasst die Startseite 41 mehrere Bedienbuttons 43.

Bei der hier dargestellten Ausführungsform sind ein Bedienbutton 43 für "Rezepturen/Materialübersicht", ein Bedienbutton 43 für "TT" (Trocknungtrichter), ein Bedienbutton 43 für "TT Kurven" (Kurven hinsichtlich Auslastungs- und Temperaturübersicht), ein Bedienbutton 43 für "Trockenlufterzeuger", ein Bedienbutton 43 für "Trockenlufterzeuger Kurven", ein Bedienbutton 43 für "System", ein Bedienbutton 43 für "Archiv" und ein Bedienbutton 43 für "Benutzer anmelden". Bei Betätigung eines der Bedienbuttons 43 öffnet sich eine weitere Seite auf dem Display 40, über die der Benutzer Eingaben für die Trocknung von Schüttgut 20 machen oder Information über die Trocknung von Schüttgut 20 abrufen kann. Ferner ist ein Button 43 für "Reset" vorgesehen.

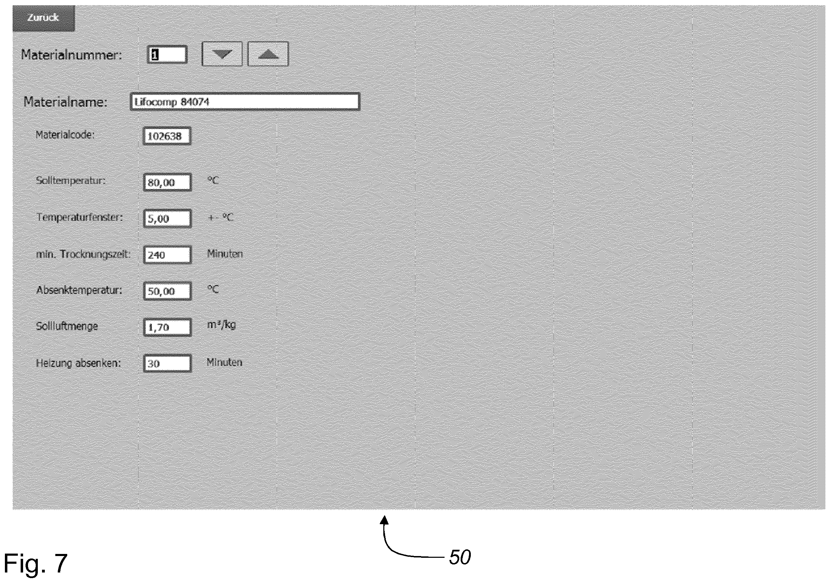

**Figur 7** zeigt eine mögliche Ausführungsform der Eingabeseite 50 für die Materialdatenbank, die in der Datenbank 17 der zentralen Steuerung 3 hinterlegt ist. Auf der Eingabeseite 50 kann z.B. die Materialnummer, der Materialname, der Materialcode, die Solltemperatur zum Trocknen im Trocknungtrichter 10, das Temperaturfenster und die Solltemperatur, die minimale Trocknungszeit, die Absenktemperatur der Heizung 2, die Sollluftmenge und die Zeitdauer, nach der die Heizung 2 abgesenkt werden soll, eingegeben werden. Es ist selbstverständlich, dass die vorstehende Aufzählung nicht abschließend ist und nicht als Beschränkung der Erfindung aufgefasst werden kann.

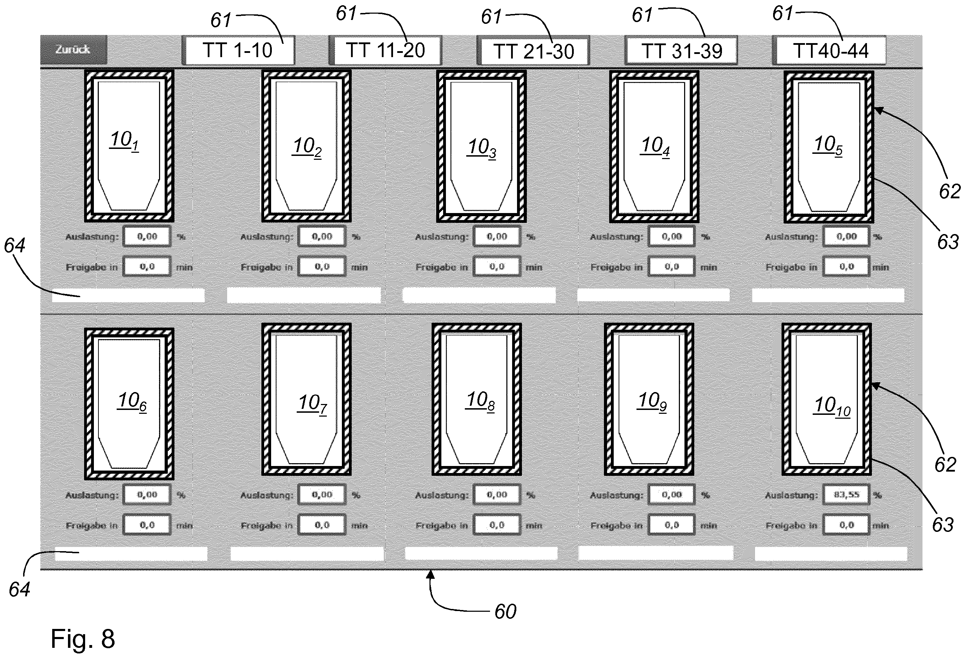

**Figur 8** zeigt eine Überwachungsseite 60 zur Auswahl einzelner Trocknungtrichter $10_1$, $10_2$,..., $10_{10}$. Die Überwachungsseite 60 hat mehrere Gruppen-Buttons 61, mit denen verschiedene Gruppen von Trocknungtrichtern ausgewählt werden können. Bei der hier dargestellten Ausführungsform ist die erste Gruppe von zehn Trocknungtrichtern $10_1$, $10_2$,..., $10_{10}$ ausgewählt worden. In einzelnen Fenstern 62 werden die Trocknungtrichter $10_1$, $10_2$,..., $10_{10}$ auf der Überwachungsseite 60 dargestellt. Jedes Fenster 62 ist mit einem Rahmen 63 versehen, der mit einer farblichen Kennzeichnung versehen werden kann, die dem Benutzer den Status des jeweiligen Trocknungtrichters $10_1$, $10_2$,..., $10_{10}$ anzeigt. Ist der Rahmen 63 mit grüner Farbe gefüllt, zeigt dies an, dass der Trocknungtrichter in Betrieb und in Ordnung ist. Ist der Rahmen 63 mit gelber Farbe gefüllt, zeigt dies an, dass der Trocknungtrichter in außer Betrieb ist. Ist der Rahmen 63 mit roter Farbe gefüllt, zeigt dies an, dass der Trocknungtrichter keine Freigabe hat das Material bzw. das Schüttgut zur Verarbeitung zu transportieren. Ist der Rahmen 63 mit blauer Farbe gefüllt, zeigt dies an, dass bei dem Trocknungtrichter eine Temperaturabsenkung aktiv ist. Die gewählte und beschriebene farbliche Kennzeichnung soll nicht als eine Beschränkung der Erfindung aufgefasst werden.

Jedem einzelnen Fenster 62 ist eine Anzeige mit der Bezeichnung "Auslastung" zugeordnet, die die Auslastung des jeweiligen Trocknungtrichters, bezogen auf den Materialdurchsatz, anzeigt. Die Anzeige mit der Bezeichnung "Freigabe in" gibt die Zeit bis zur Freigabe der Materialförderung aus dem jeweiligen Trocknungtrichter zur Verarbeitung an. Ebenso ist eine weitere Anzeige 64 jedem einzelnen Fenster 62 zugeordnet, die den Materialnamen des Schüttguts im jeweiligen Trocknungtrichter $10_1$, $10_2$,..., $10_{10}$ anzeigt. Die hier gezeigte Darstellung der Überwachungsseite 60 ist lediglich eine von vielen Möglichkeiten und soll nicht als Beschränkung der Erfindung aufgefasst werden.

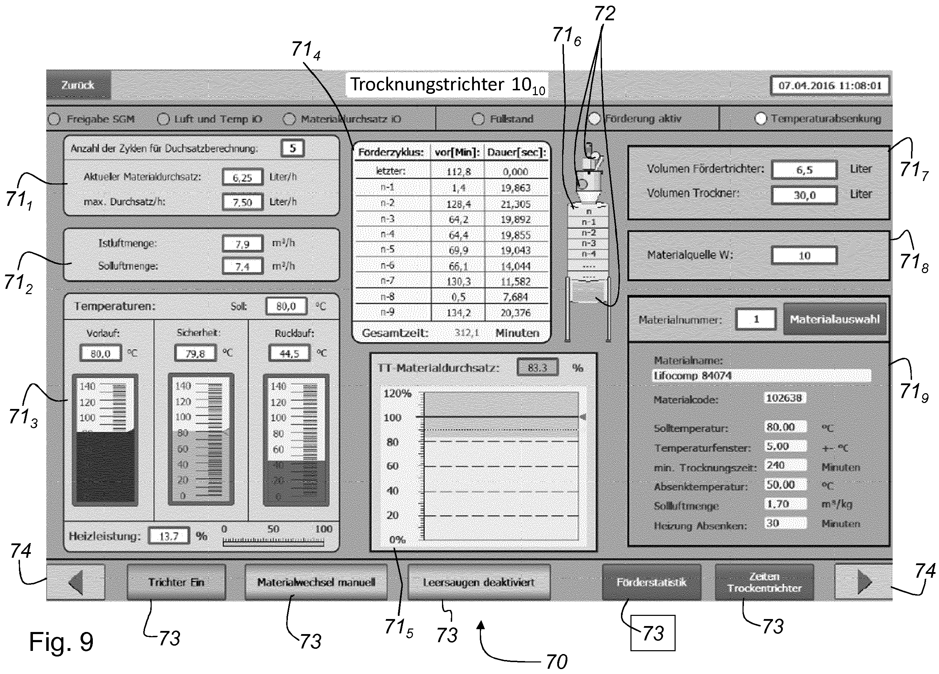

**Figur 9** zeigt eine Überwachungsseite 70 (Satus, Funktion etc.) für einen ausgewählten, einzelnen Trocknungstrichter $10_1$, $10_2$,..., $10_N$. Hier werden zur Beschreibung der Erfindung zehn Trocknungstrichter $10_1$, $10_2$,..., $10_{10}$ dargestellt, was nicht als Beschränkung der Erfindung aufgefasst werden soll. Hier wurde aus der Überwachungsseite 60 (Figur 8) der Trocknungstrichter $10_{10}$ ausgewählt. Die Überwachungsseite 70 hat mehrere Fenster. Die hier gezeigte Zusammensetzung der Überwachungsseite 70 ist eine mögliche Ausführungsform und soll nicht als Beschränkung der Erfindung aufgefasst werden.

Das Fenster $71_1$ zeigt den Parameter der Anzahl der Zyklen (Förderzyklen) an, die für die Durchsatzberechnung herangezogen werden. Der Parameter kann von einem berechtigten Benutzer geändert werden. Die Anzahl der betrachteten Zyklen zur Durchsatzberechnung werden von der Steuerung 3 automatisch in Abhängigkeit des Volumens des Trocknungstrichters $10_1$, $10_2$,..., $10_N$ und des Volumens des Materialabscheiders 8 berechnet und können nicht geändert werden. Ferner sind der aktuelle Materialdurchsatz und der maximale Durchsatz pro Stunde angegeben.

Das Fenster $71_2$ zeigt die Ist-Luftmenge an, die durch den Trocknungstrichter $10_{10}$ gefördert wird und die Soll-Luftmenge, die für den Trocknungstrichter $10_{10}$ erforderlich ist, um die Trocknung des Schüttguts im Trocknungstrichter $10_{10}$ zu gewährleisten.

Das Fenster $71_3$ zeigt die Soll-Temperatur an, mit der die Luft oder das Gas dem Trocknungstrichter $10_{10}$ zugeführt werden soll. Ebenso werden in mit Skalen versehenen Balkendiagrammen die Temperatur des Vorlaufs, die Temperatur einer Sicherheit und die Temperatur des Rücklaufs angegeben. Zusätzlich ist die aktuelle Heizleistung der Heizung 2 numerisch angegeben und auch mit einer Skala visualisiert.

Das Fenster $71_4$ zeigt die Zeitabstände und Förderzeiten zwischen den zehn Förderzyklen in dem Trocknungstrichter $10_{10}$ an.

Das Fenster $71_5$ informiert numerisch über den aktuellen Materialdurchsatz des Trocknungstrichters $10_{10}$. Ebenso ist der aktuelle Materialdurchsatz mit einer Skala visualisiert. Zur schnelleren visuellen Erfassung findet ein Farbwechsel der Skala bei einem Wechsel zwischen festgelegten prozentualen Auslastungsbereichen statt. Zum Beispiel ist die Farbe der Skala grün, wenn sich die Auslastung im Bereich von 0 bis 80 Prozent befindet. Die Farbe der Skala ist gelb, wenn sich die Auslastung im Bereich zwischen 80 und 100 Prozent befindet. Die Farbe der Skala ist rot, wenn sich die Auslastung über 100 Prozent befindet.

Das Fenster $71_6$ zeigt eine graphische Darstellung des Trocknungstrichters $10_{10}$ mit dem zugeordneten Materialabscheider. Der graphischen Darstellung des Trocknungstrichters $10_{10}$ sind mehrere farblich kennzeichenbare Indikatoren 72 zugeordnet, die den Zustand der Förderung in den Materialabscheider, den Füllstand im Materialabscheider und den Zustand des Materialdurchsatzes angeben. Bei der hier dargestellten Situation bedeutet eine gelbe Kennzeichnung, dass die Förderung in dem Materialabscheider aktiv ist. Eine grüne Kennzeichnung des Füllstands im Materialabscheider bedeutet, dass der Füllstand in Ordnung ist. Eine grüne Kennzeichnung des Zustands des Materialdurchsatzes bzw. der Freigabe des Materials bedeutet, dass der Materialdurchsatz bzw. die Freigabe in Ordnung ist bzw. die Freigabe des Materials erfolgt ist.

Das Fenster $71_7$ gibt das Volumen im Materialabscheider und das Volumen im Trocknungstrichter an. Das Fenster $71_8$ gibt die Materialquelle an, aus der Material in den Trocknungstrichter $10_{10}$ bzw. in den zugeordneten Materialabscheider gefördert wird.

Das Fenster $71_9$ informiert über die Material- und Trocknungsparameter des Materials im Trocknungstrichter $10_{10}$.

Ferner sind mehrere Buttons 73 auf der Überwachungsseite 70 dargestellt, mit denen eine Reihe von Funktionen des Trocknungstrichters $10_{10}$ ausgewählt werden können. Über Scroll-Buttons 74 können noch weitere Funktionen für den Trocknungstrichter $10_{10}$ ausgewählt werden.

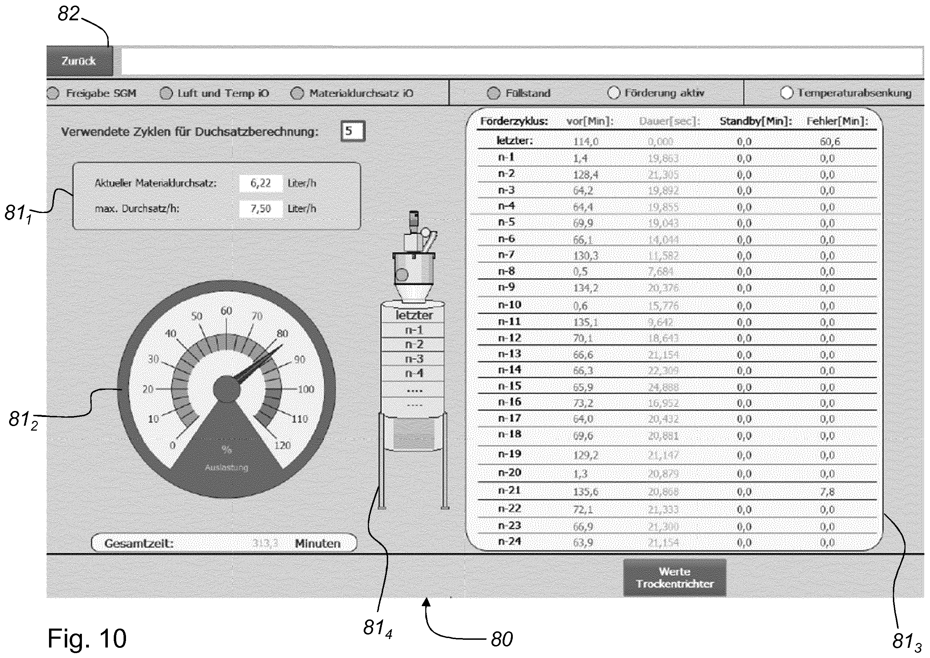

**Figur 10** zeigt eine Förderstatistikseite 80 für den ausgewählten Trocknungstrichter $10_{10}$. Mit dem Zurück-Button 82 gelangt man wieder zurück zur Überwachungsseite 70. In einem Fenster $81_1$ werden der aktuelle Materialdurchsatz und der maximale Durchsatz angegeben. Für die Berechnung des Materialdurchsatzes werden bei dieser Ausführungsform die letzten fünf Förderzyklen verwendet. Es ist selbstverständlich, dass die Anzahl der Förderzyklen je nach Größe des Materialabscheiders 8 im Verhältnis zum Trockentrichter $10_{10}$ variiert. Im Fenster $81_2$ ist eine graphische Anzeige der Auslastung des Trocknungstrichters $10_{10}$ dargestellt. Im Fenster $81_3$ sind die einzelnen Förderzyklen, deren zeitlichen Abstände, die Dauer eines jeden einzelnen Förderzyklus, die Stand-by-Zeit für jeden Förderzyklus und die Fehlerzeit für jeden Förderzyklus dargestellt. Ebenso ist im Fenster $81_4$ nochmals die graphische Darstellung des Trocknungstrichters $10_{10}$ aus Figur 9 dargestellt.

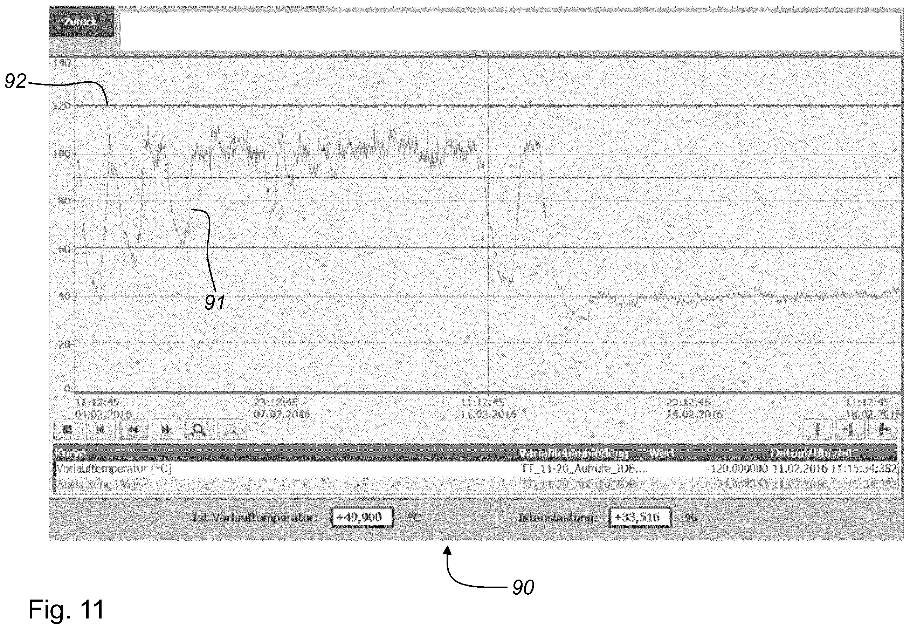

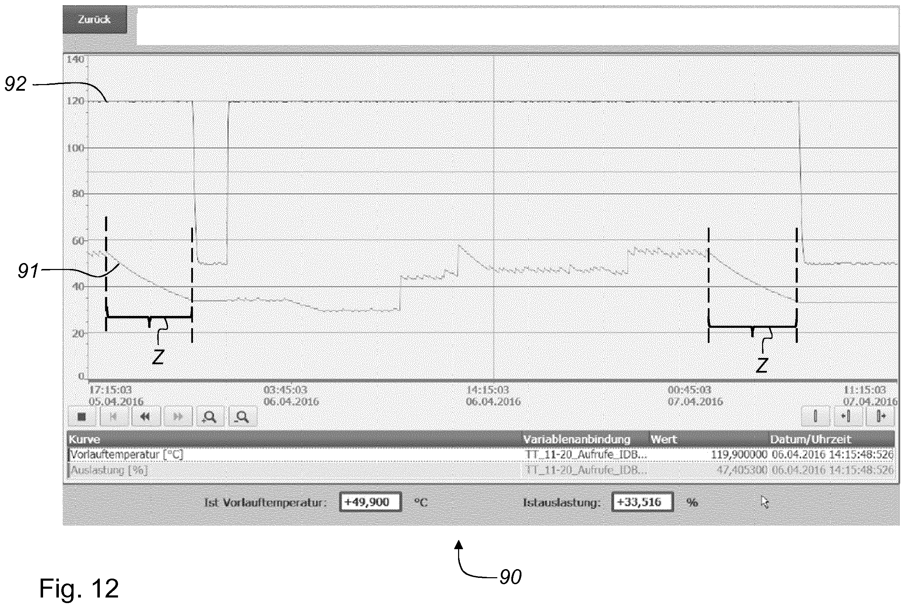

Die **Figur 11** und die **Figur 12** zeigen jeweils Kurvenseiten 90. In den Figuren 11 und 12 stellt die Kurve 91 den zeitlichen Verlauf der Auslastung eines ausgewählten Trocknungstrichters dar, und die Kurve 92 stellt den zeitlichen Verlauf der Vorlauftemperatur (Temperatur der Gas- bzw. Luftmenge, die zum Trocknungstrichter transportiert wird) dar. Figur 11 zeigt, wie aus der Kurve 91 zu erkennen ist, eine sehr aktive Auslastung des jeweiligen Trocknungstrichters. Die Kurve 92 für die Vorlauftemperatur bleibt dabei auf einem konstanten und auch geforderten Niveau. Figur 12 zeigt, dass der Trocknungstrichter auch in einen Stand-by gefahren werden kann. Wenn, wie in Figur 12 dargestellt, die Auslastung des Trocknungstrichters für eine bestimmte Zeitspanne Z abfällt, wird die Vorlauftemperatur abgesenkt. Bei der Darstellung der Figur 12 wird die Absenkung der Vorlauftemperatur zweimal durchgeführt. Eine Absenkung in den Standby-Betrieb erfolgt nur, wenn die unterste Schicht bereits erfolgreich getrocknet worden ist.

**Bezugszeichenliste**

| | |
|---|---|
| 1 | Trockengaserzeuger |
| 2 | Heizung |
| 3 | zentrale Steuerung |
| 4 | Stellklappe |
| 5 | Unterdruckpumpe |
| 6 | Durchflusssensor |
| 7 | Füllstandsensor |
| 8 | Materialabscheider |
| 9 | Reservoir |
| $9_1, 9_2,...,9_M$ | Reservoir |
| 10 | Trocknungstrichter |
| $10_1, 10_2,..., 10_N$ | Trocknungstrichter |
| 11 | erste Leitung |
| 12 | zweite Leitung |
| 13 | Ventil |
| 14 | Materialleitung |
| 15 | Ventil |
| 16 | Materialabsaugkasten |
| 17 | Datenbank |
| 18 | Verbraucher |
| 19 | Materialleitung |
| 20 | Schüttgut |
| $20_1, 20_2,..., 20_M$ | Schüttgut |
| 21 | erste Kommunikationsverbindung |
| 22 | zweite Kommunikationsverbindung |
| 23 | Gebläse |
| 24 | Taupunkt- und Durchflusssensor |
| 25 | Unterdruckleitung |
| $30_1, 30_2,..., 30_K$ | Schicht des Schüttguts |
| 31 | Schüttkegel |
| 32 | Materialklappe |
| 34 | Leitung |
| 36 | Filter |
| 40 | Display |
| 41 | Startseite |
| 42 | Fenster |
| 43 | Button |
| 50 | Eingabeseite |
| 60 | Überwachungsseite |
| 61 | Gruppen-Button |
| 62 | Fenster |
| 63 | Rahmen |
| 64 | Anzeige |
| 70 | Überwachungsseite |
| $71_1$ | Fenster |
| $71_2$ | Fenster |
| $71_3$ | Fenster |
| $71_4$ | Fenster |
| $71_5$ | Fenster |
| $71_6$ | Fenster |
| $71_7$ | Fenster |

| $71_8$ | Fenster |
|---|---|
| $71_9$ | Fenster |
| 72 | Indikator |
| 73 | Button |
| 74 | Scroll-Button |
| 80 | Förderstatistikseite |
| $81_1$ | Fenster |
| $81_2$ | Fenster |
| $81_3$ | Fenster |
| $81_4$ | Fenster |
| 82 | Zurück-Button |
| 90 | Kurvenseite |
| 91 | Kurve |
| 92 | Kurve |
| 100 | oberer Bereich |
| $t_1, t_2, ..., t_K$ | Zeitpunkt |
| Z | Zeitspanne |

**Patentansprüche**

1. Anordnung zum Entfeuchten von granulatförmigem Schüttgut (20) aus Kunststoff umfassend:

   • mindestens einen Trockengaserzeuger (1);
   • eine Steuerung (3) mit einem Speicher (17);
   • mindestens zwei Trocknungssysteme, jedes Trocknungssystem umfassend:

      • einen Trocknungstrichter (10, $10_1$, $10_2$, ... $10_N$), der über eine erste Leitung (11) für eine Zufuhr von getrocknetem Gas aus dem Trockengaserzeuger (1) und über eine zweite Leitung (12) für eine Ableitung von mit Feuchtigkeit beladenem Gas aus dem Trocknungstrichter (10, $10_1$, $10_2$, ... $10_N$) mit dem Trockengaserzeuger (1) verbunden ist;
      • eine Heizung (2), die in der ersten Leitung (11) dem Trocknungstrichter (10, $10_1$, $10_2$, ... $10_N$) vorgeordnet ist;
      • einen Durchflusssensor (6), der in der ersten Leitung (11) zum Trocknungstrichter (10, $10_1$, $10_2$, ... $10_N$) vorgesehen ist;
      • einen Füllstandsensor (7), der einem Materialabscheider (8) eines jeden Trocknungstrichters (10, $10_1$, $10_2$, ... $10_N$) zugeordnet ist;
      • eine Stellklappe (4) zum automatischen Einstellen der Gasmenge zum Trocknungstrichter (10, $10_1$, $10_2$, ... $10_N$);
      • jeweils erste Kommunikationsverbindungen (21) vom Füllstandsensor (7), von der Heizung (2) und vom Durchflusssensor (6) zur Steuerung (3); und
      • jeweils zweite Kommunikationsverbindungen (22) von der Steuerung (3), zur Heizung (2) und zur Stellklappe (4) zum automatischen Einstellen der Gasmenge und deren Temperatur zum Trocknungstrichter (10, $10_1$, $10_2$, ... $10_N$);

   **dadurch gekennzeichnet, dass** die Steuerung (3) so eingerichtet ist, dass die Stellklappe (4) und die Heizung (2) in der ersten Leitung (11) zum jeweiligen Trocknungstrichter (10, $10_1$, $10_2$, ... $10_N$) in Abhängigkeit von der Stellklappe (4) und der Heizung (2) in der ersten Leitung (11) zu einem weiteren der Trocknungstrichter (10, $10_1$, $10_2$, ... $10_N$) derart bedarfsgerecht gesteuert werden, dass in dem Trocknungstrichter (10, $10_1$, $10_2$, ... $10_N$) mit dem höchsten Durchsatz an Schüttgut (20) die Gasmenge und die Temperatur derart eingestellt werden, dass sie der erforderlichen Soll-Gasmenge und der Soll-Temperatur entsprechen.

2. Anordnung nach Anspruch 1, umfassend mindestens eine Unterdruckpumpe (5), die mit dem Materialabscheider (8) eines jeden Trocknungstrichters (10, $10_1$, $10_2$, ... $10_N$) über eine Unterdruckleitung (25) fluid verbunden ist, wobei der Materialabscheider (8) über eine Materialleitung (14) mit mindestens einem Reservoir (9, $9_1$, $9_2$,...,$9_M$) für Schüttgut (20, $20_1$, $20_2$,..., $20_M$) verbunden ist, wobei die Unterdruckpumpe (5) sowohl über die erste Kommunikationsverbindung (21) als auch über die zweite Kommunikationsverbindung (22) mit der Steuerung (3) verbunden ist, wobei beispielsweise ein Ende der Unterdruckleitung (25) am Materialabscheider (8) durch einen Filter (36) abgedeckt ist, um zu verhindern, dass Schüttgut (20) in die Unterdruckleitung (25) saugbar ist.

3. Anordnung nach einem der vorangehenden Ansprüche, wobei der Materialabscheider (8) eines jeden Trocknungstrichters (10, $10_1$, $10_2$, ... $10_N$) eine in den jeweiligen Trocknungstrichter (10, $10_1$, $10_2$, ... $10_N$) schwenkbare Materialklappe (32) aufweist, die geschlossen ist, wenn sich kein Schüttgut (20) im Materialabscheider (8) befindet bzw. Schüttgut (20) in dem Materialabscheider (8) förderbar ist und die zum jeweiligen Trocknungstrichter (10, $10_1$, $10_2$, ... $10_N$) auf ein Signal des Füllstandsensors (7) bei Erreichen der Sollmenge an Schüttgut (20) im Materialabscheider 8 geöffnet ist, damit immer eine komplette Befüllung des jeweiligen Trocknungstrichters (10, $10_1$, $10_2$, ... $10_N$) gegeben ist.

4. Anordnung nach einem der voranstehenden Ansprüche, umfassend

- ein Ventil (13) in einer Materialleitung (14) vom Schüttgut (20) zum Materialabscheider (8) des mindestens einen Trocknungstrichters (10, $10_1$, $10_2$, ... $10_N$); und/oder
- ein Ventil (15) in einer Materialleitung (19) vom Materialabsaugkasten (16) des mindestens einen Trocknungstrichters (10, $10_1$, $10_2$, ... $10_N$) zu einem Verbraucher (18) für das Schüttgut (20); wobei beispielsweise jeweils zweite Kommunikationsverbindungen (22) zum Ventil (13) in der Materialleitung (14) aus mindestens einem Reservoir (9, $9_1$, $9_2$,..., $9_M$) vorgesehen sind, um ein Leersaugen der Materialleitung (14) zu verhindern und eine in dem mindestens einen Trocknungstrichter (10, $10_1$, $10_2$, ... , $10_N$) gelangende Menge an Schüttgut (20) genau zu bestimmen, und zum Ventil (15), um das Schüttgut (20) mit einem definierten Feuchtegehalt aus dem mindestens einen Trocknungstrichter (10, $10_1$, $10_2$, ..., $10_N$) freizugeben .

5. Anordnung nach Anspruch 1, wobei dem Trockengaserzeuger (1) ein steuerbares Gebläse (23) und ein Taupunkt- und Durchflusssensor (24) zugeordnet sind und die zentrale Steuerung (3) über die erste Kommunikationsverbindung (21) mit dem Gebläse (23) und der Taupunkt- und Durchflusssensor (24) über die zweite Kommunikationsverbindung (22) mit der zentralen Steuerung (3) verbunden ist.

6. Verfahren zum Entfeuchten von granulatförmigem Schüttgut (20), mittels mindestens eines Trockengaserzeugers (1) und mindestens zwei Trocknungstrichter (10, $10_1$, $10_2$, ..., $10_N$), wobei jeder Trocknungstrichter über eine erste Leitung (11) für eine Zufuhr von getrocknetem Gas aus dem Trockengaserzeuger (1) und über eine zweite Leitung (12) für eine Ableitung von mit Feuchtigkeit beladenem Gas aus dem mindestens einen Trocknungstrichter (10, $10_1$, $10_2$, ..., $10_N$) mit dem Trockengaserzeuger (1) verbunden ist, das Verfahren umfassend die folgenden Schritte:

- dass im jeweiligen Trocknungstrichter (10, $10_1$, $10_2$, ..., $10_N$) mindestens mehrere Schichten ($30_1$, $30_2$,..., $30_K$) aus einem Typ des Schüttguts (20, $20_1$, $20_2$,...$20_M$) dadurch ausgebildet werden, dass der Typ des Schüttguts (20, $20_1$, $20_2$,...$20_M$) aus einem zugeordneten Reservoir ($9_1$, $9_2$,..., $9_M$) über einen Materialabscheider (8) des mindestens einen Trocknungstrichters (10, $10_1$, $10_2$, ..., $10_N$) mittels mindestens einer Unterdruckpumpe (5) gefördert wird, wobei der Materialabscheider (8) mit dem jeweiligen Reservoir (9, $9_1$, $9_2$,...,$9_M$) für Schüttgut (20, $20_1$, $20_2$,..., $20_M$) über eine Materialleitung (14) fluid verbunden und in der Materialleitung (14) vom Reservoir (9, $9_1$, $9_2$,...,$9_M$) zum Materialabscheider (8) ein Ventil (13) vorgesehen ist, das durch eine zentrale Steuerung (3) gesteuert wird, damit die Förderung des Schüttguts (20, $20_1$, $20_2$,...$20_M$) freigegeben oder unterbunden wird;
- dass die Förderung des ausgewählten Typs des Schüttguts (20, $20_1$, $20_2$,...$20_M$) in den Materialabscheider (8) von einem Füllstandsensor (7) überwacht wird, wobei ein Signal des Materialabscheiders (8) eine komplette Befüllung des Materialabscheiders (8) bzw. eine erforderliche Soll-Fördermenge im Materialabscheider (8) des jeweiligen Trocknungstrichters (10, $10_1$, $10_2$, ..., $10_N$) anzeigt, das an die zentrale Steuerung (3) übermittelt wird, und von der zentralen Steuerung (3) das Ventil (13) in der Materialleitung (14) aus mindestens einem Reservoir (9, $9_1$, $9_2$, ..., $9_M$) derart gesteuert wird, dass die Materialleitung (14) unterbrochen und eine Materialklappe (32) zum zugeordneten Trocknungstrichter (10, $10_1$, $10_2$, ..., $10_N$) hin geöffnet wird;
- dass eine Gasmenge für die Entfeuchtung der mindestens einen Schicht ($30_1$, $30_2$,..., $30_K$) des Schüttguts (20, $20_1$, $20_2$,...$20_M$) im jeweiligen Trocknungstrichter (10, $10_1$, $10_2$, ..., $10_N$) über einen Durchflusssensor (6) in der ersten Leitung (11) gemessen und das Signal an die zentrale Steuerung (3) übermittelt wird, und
- dass die zentrale Steuerung (3) Daten aus einem ihr zugeordneten Speicher (17) abruft, mittels denen Stell- und Regelgrößen der Anordnung berechnet werden;
**dadurch gekennzeichnet,**
- **dass** über die zentrale Steuerung (3) eine Stellklappe (4) und eine Heizung (2) in der ersten Leitung (11) zum jeweiligen Trocknungstrichter (10, $10_1$, $10_2$, ..., $10_N$) in Abhängigkeit von der Stellklappe (4) und der Heizung (2) in der ersten Leitung (11) zu einem weiteren der Trocknungstrichter (10, $10_1$, $10_2$, ... $10_N$) derart bedarfsgerecht gesteuert werden, dass in dem Trocknungstrichter (10, $10_1$, $10_2$, ... $10_N$) mit dem höchsten Durchsatz an Schüttgut (20) die Gasmenge und die Temperatur derart eingestellt werden, dass sie der erforderlichen Soll-Gasmenge und der Soll-Temperatur entsprechen.

7. Verfahren nach Anspruch 6, wobei diejenigen Trocknungstrichter ($10_1$, $10_2$, ..., $10_N$) in einen Standby-Modus gefahren werden, wenn eine unterste Schicht ($30_6$) des Schüttguts (20) im jeweiligen Trocknungstrichter (10, $10_1$, $10_2$, ..., $10_N$) bis zu einem verarbeitbaren Feuchtegehalt getrocknet wurde und aus den Trocknungstrichtern ($10_1$, $10_2$, ..., $10_N$) für eine vorgegebene Zeit kein Schüttgut entnommen wurde.

8. Verfahren nach einem der Ansprüche 6 oder 7, wobei der Materialabscheider (8) eines jeden Trocknungstrichters (10, $10_1$, $10_2$, ... $10_N$) die in den jeweiligen Trocknungstrichter (10, $10_1$, $10_2$, ... $10_N$) schwenkbare Materialklappe (32) aufweist und über die das jeweilige Schüttgut ($20_1$, $20_2$,..., $20_M$) in den jeweiligen Trocknungstrichter (10, $10_1$, $10_2$, ... $10_N$) verbracht wird, wenn die schwenkbare Materialklappe (32) aufgrund der Schwerkraft des in den Materialabscheider (8) transportierten Schüttguts (20, $20_1$, $20_2$,...$20_M$), das der Menge des Schüttguts (20, $20_1$, $20_2$,...$20_M$) entspricht, das über den Materialabsaugkasten (16) entnommen wurde, geöffnet wird.

9. Verfahren nach Anspruch 8, wobei ein Durchsatz an Schüttgut (20, $20_1$, $20_2$,...$20_M$) aus dem jeweiligen Trocknungstrichter (10, $10_1$, $10_2$, ..., $10_N$) zum zugeordneten Verbraucher (18) berechnet wird, und von der zentralen Steuerung (3) ein Ventil (15) in einer Materialleitung (19) vom Materialabsaugkasten (16) zum Verbraucher (18) unterbrochen wird, wenn die noch verbleibende Trocknungszeit für die noch im Trocknungstrichter (10, $10_1$, $10_2$, ..., $10_N$) befindliche unterste Schicht ($30_U$) des Schüttguts ($20_1$, $20_2$,..., $20_M$) nicht ausreicht, um einen Soll-Feuchtegehalt des Schüttguts ($20_1$, $20_2$,..., $20_M$) der untersten Schicht ($30_U$) zu erreichen.

10. Verfahren nach Anspruch 6, wobei in einer der zentralen Steuerung (3) zugeordneten Datenbank (17) Daten zum Volumen eines jeden Trocknungstrichters (10, $10_1$, $10_2$, ... $10_N$), zum Volumen eines jeden Materialabscheiders (8), zu Materialparametern des Schüttguts ($20_1$, $20_2$,..., $20_M$), wie z.B. Materialnummer, Materialname, Soll-Temperatur für die zur Entfeuchtung dem Material im jeweiligen Trocknungstrichter (10, $10_1$, $10_2$, ... $10_N$) zugeführte Gas- oder Luftmenge, zur minimalen Trocknungszeit des Schüttguttyps im jeweiligen Trocknungstrichter (10, $10_1$, $10_2$, ... $10_N$) und zur Sollgasmenge für das Material im jeweiligen Trocknungstrichter (10, $10_1$, $10_2$, ... $10_N$) hinterlegt werden und wobei mittels dieser Daten die zentrale Steuerung (3) die Stell- und Regelgrößen der Anordnung berechnet.

11. Verfahren nach Anspruch 6, wobei mittels Daten zum Volumen des dem jeweiligen Materialabscheiders (8) zugeordneten Trocknungstrichters (10, $10_1$, $10_2$, ... $10_N$) und zum Volumen des jeweiligen Trocknungstrichters (10, $10_1$, $10_2$, ..., $10_N$) die Anzahl der Fördervorgänge für eine komplette Befüllung des Trocknungstrichters (10, $10_1$, $10_2$, ..., $10_N$) ermittelt wird.

12. Verfahren nach einem der Ansprüche 6 bis 11, wobei im komplett befüllten Trocknungstrichter (10, $10_1$, $10_2$, ... $10_N$) mehrere Schichten ($30_1$, $30_2$, ..., $30_K$) des Schüttguts (20) ausgebildet werde, die zu unterschiedlichen Zeiten in den Trocknungstrichter (10, $10_1$, $10_2$, ... $10_N$) gefüllt wurden, wobei mittels der Steuerung (3) eine aus dem Materialabsaugkasten (16) entnommene Menge des Schüttguts (20) über den Materialabscheider (8) zugeführt wird.

**Claims**

1. Assembly for dehumidifying granular bulk material (20) of plastic, comprising:

   • at least one drying gas generator (1);
   • a control unit (3) with a memory (17);
   • at least two drying systems, each drying system comprising:

      • a drying hopper (10, $10_1$, $10_2$,...$10_N$) which is connected to the drying gas generator (1) via a first line (11) for supplying dried gas from the drying gas generator (1) and via a second line (12) for discharging moisture-laden gas from the drying hopper (10, $10_1$, $10_2$,...$10_N$);
      • a heater (2) which is arranged in the first line (11) upstream of the drying hopper (10, $10_1$, $10_2$,...$10_N$);
      • a flow sensor (6) which is provided in the first line (11) to the drying hopper (10, $10_1$, $10_2$,...$10_N$);
      • a level sensor (7) associated with a material separator (8) of each drying hopper (10, $10_1$, $10_2$,...$10_N$);
      • a regulating flap (4) for automatically adjusting the gas quantity to the drying hopper (10, $10_1$, $10_2$,...$10_N$);
      • respective first communication connections (21) from the level sensor (7), from the heater (2) and from the flow sensor (6) to the control unit (3); and
• respective second communication connections (22) from the control unit (3) to the heater (2) and to the regulating flap (4) for automatic adjustment of the gas quantity and its temperature to the drying hopper (10, $10_1$, $10_2$,...$10_N$);

**characterized in that** the control unit (3) is set up in such a way that the regulating flap (4) and the heater (2) in the first line (11) to the respective drying hopper (10, $10_1$, $10_2$,...$10_N$) are controlled according to requirements depending on the regulating flap (4) and the heater (2) in the first line (11) in such a way that the gas quantity and the temperature in the drying hopper (10, $10_1$, $10_2$,...$10_N$) with the highest throughput of bulk material (20) are set in such a way that they correspond to the required target gas quantity and the target temperature.

2. Assembly according to claim 1, comprising at least one vacuum pump (5) which is fluid-connected to the material separator (8) of each drying hopper (10, $10_1$, $10_2$,...$10_N$) via a vacuum line (25), wherein the material separator (8) is connected via a material line (14) to at least one reservoir (9, $9_1$, $9_2$, ...., $9_M$) for bulk material (20, $20_1$, $20_2$, ...., $20_M$), wherein the vacuum pump (5) is connected to the control unit (3) both via the first communication connection (21) and via the second communication connection (22), wherein, for example, one end of the vacuum line (25) on the material separator (8) is covered by a filter (36) to prevent bulk material (20) from being sucked into the vacuum line (25).

3. Assembly according to one of the preceding claims, wherein the material separator (8) of each drying hopper (10, $10_1$, $10_2$,... $10_N$) has a material flap (32), which can be pivoted into the respective drying hopper (10, $10_1$, $10_2$,... $10_N$), and which is closed when no bulk material (20) is present in the material separator (8) or when bulk material (20) can be conveyed in the material separator (8), and which is opened to the respective drying hopper (10, $10_1$, $10_2$,...$10_N$) in response to a signal from the level sensor (7) when the target quantity of bulk material (20) in the material separator (8) is reached, so that the respective drying hopper (10, $10_1$, $10_2$,...$10_N$) is always completely filled.

4. Assembly according to one of the preceding claims, comprising

• a valve (13) in a material line (14) from the bulk material (20) to the material separator (8) of the at least one drying hopper (10, $10_1$, $10_2$,...$10_N$); and/or
• a valve (15) in a material line (19) from a material suction box (16) of the at least one drying hopper (10, $10_1$, $10_2$,...$10_N$) to a consumer (18) for the bulk material (20); wherein, for example, respective second communication connections (22) to the valve (13) are provided in the material line (14) from at least one reservoir (9, $9_1$, $9_2$, ...., $9_M$) to prevent the material line (14) from being sucked empty and to accurately determine an amount of bulk material (20) to reach the at least one drying hopper (10, $10_1$, $10_2$,...$10_N$), and to the valve (15) to release the bulk material (20) with a defined moisture content from the at least one drying hopper (10, $10_1$, $10_2$,...$10_N$).

5. Assembly according to claim 1, wherein a controllable fan (23) and a dew point and flow sensor (24) are associated with the drying gas generator (1), and the central control unit (3) is connected to the fan (23) via the first communication connection (21), and the dew point and flow sensor (24) is connected to the central control unit (3) via the second communication connection (22).

6. Method for dehumidifying granular bulk material (20), by means of at least one drying gas generator (1) and at least two drying hoppers (10, $10_1$, $10_2$,...$10_N$), wherein each drying hopper is connected to the drying gas generator (1) via a first line (11) for a supply of dried gas from the drying gas generator (1) and via a second line (12) for a discharge of moisture-laden gas from the at least one drying hopper (10, $10_1$, $10_2$,...$10_N$), the method comprising the following steps:

• that in the respective drying hopper (10, $10_1$, $10_2$,...$10_N$) at least several layers ($30_1$, $30_2$, ...., $30_K$) of one type of the bulk material (20, $20_1$, $20_2$, ...., $20_M$) are formed in such a way that the type of bulk material (20, $20_1$, $20_2$, ...., $20_M$) is discharged from an associated reservoir ($9_1$, $9_2$, ...., $9_M$) via a material separator (8) of the at least one drying hopper (10, $10_1$, $10_2$,...$10_N$) by means of at least one vacuum pump (5), wherein the material separator (8) is fluid-connected to the respective reservoir (9, $9_1$, $9_2$, ...., $9_M$) for bulk material (20, $20_1$, $20_2$, ...., $20_M$) via a material line (14), and a valve (13) is provided in the material line (14) from the reservoir (9, $9_1$, $9_2$, ...., $9_M$) to the material separator (8), which valve (13) is controlled by a central control unit (3) so that the conveyance of the bulk material (20, $20_1$, $20_2$, ...., $20_M$) is enabled or stopped;
• that the conveyance of the selected type of bulk material (20, $20_1$, $20_2$, ...., $20_M$) into the material separator (8) is monitored by a level sensor (7), wherein a signal from the material separator (8) indicates a complete filling of the material separator (8) or a required target delivery quantity in the material separator (8) of the respective drying hopper (10, $10_1$, $10_2$,...$10_N$), which is transmitted to the central control unit (3), and the valve (13) in the material line (14) from at least one reservoir (9, $9_1$, $9_2$, ...., $9_M$) is controlled by the central control unit (3) in such a way that the material line (14) is interrupted and a material flap (32) is opened towards the associated drying hopper (10, $10_1$, $10_2$,...$10_N$);

• that a quantity of gas for dehumidifying the at least one layer ($30_1$, $30_2$, ...., $30_K$) of the bulk material (20, $20_1$, $20_2$, ...., $20_M$) in the respective drying hopper (10, $10_1$, $10_2$,...$10_N$) is measured via a flow sensor (6) in the first line (11) and the signal is transmitted to the central control unit (3); and

• that the central control unit (3) calls up data from a memory (17) assigned to it, by means of which actuating and control variables of the assembly are calculated;

**characterized in that**

• a regulating flap (4) and a heater (2) in the first line (11) to the respective drying hopper (10, $10_1$, $10_2$,...$10_N$) are controlled via the central control unit (3) as a function of the regulating flap (4) and the heater (2) in the first line (11) to another of the drying hoppers (10, $10_1$, $10_2$,...$10_N$) as required in such a way that, in the drying hopper (10, $10_1$, $10_2$,...$10_N$) with the highest throughput of bulk material (20), the gas quantity and the temperature are set in such a way that they correspond to the required target gas quantity and the target temperature.

7. Method according to claim 6, wherein those drying hoppers ($10_1$, $10_2$,...$10_N$) are run into a standby mode when a lowest layer ($30_6$) of the bulk material (20) has been dried in the respective drying hopper (10, $10_1$, $10_2$,...$10_N$) up to a processable moisture content and no bulk material has been removed from the drying hoppers ($10_1$, $10_2$,...$10_N$) for a predetermined time.

8. Method according to one of claims 6 or 7, wherein the material separator (8) of each drying hopper (10, $10_1$, $10_2$,...$10_N$) comprises the material flap (32) which can be pivoted into the respective drying hopper (10, $10_1$, $10_2$,...$10_N$) and via which the respective bulk material ($20_1$, $20_2$, ...., $20_M$) is introduced into the respective drying hopper (10, $10_1$, $10_2$,...$10_N$) when the pivotable material flap (32) is opened due to the force of gravity of the bulk material (20, $20_1$, $20_2$, ...., $20_M$) transported into the material separator (8), which corresponds to the quantity of bulk material (20, $20_1$, $20_2$, ...., $20_M$) removed via the material suction box (16).

9. Method according to claim 8, wherein a throughput of bulk material (20, $20_1$, $20_2$, ...., $20_M$) from the respective drying hopper (10, $10_1$, $10_2$,...$10_N$) to the associated consumer (18) is calculated, and a valve (15) in a material line (19) from the material suction box (16) to the consumer (18) is interrupted by the central control unit (3) when the remaining drying time for the lowest layer (30u) of the bulk material ($20_1$, $20_2$, ...., $20_M$) still present in the drying hopper (10, $10_1$, $10_2$,...$10_N$) is not sufficient to reach a target moisture content of the bulk material ($20_1$, $20_2$, ...., $20_M$) of the lowest layer (30u).

10. Method according to claim 6, wherein data on the volume of each drying hopper (10, $10_1$, $10_2$,... $10_N$), on the volume of each material separator (8), on material parameters of the bulk material ($20_1$, $20_2$, ...., $20_M$), such as e.g. material number, material name, target temperature for the gas or air quantity supplied for dehumidifying the material in the respective drying hopper (10, $10_1$, $10_2$,...$10_N$), on the minimum drying time of the bulk material type in the respective drying hopper (10, $10_1$, $10_2$,...$10_N$), and on the target gas quantity for the material in the respective drying hopper (10, $10_1$, $10_2$,...$10_N$) are stored in a database (17) associated with the central control unit (3), and wherein the central control unit (3) calculates the actuating and control variables of the assembly by means of these data.

11. Method according to claim 6, wherein the number of conveying operations for a complete filling of the drying hopper (10, $10_1$, $10_2$,...$10_N$) is determined by means of data on the volume of the drying hopper (10, $10_1$, $10_2$,...$10_N$) associated with the respective material separator (8) and on the volume of the respective drying hopper (10, $10_1$, $10_2$,...$10_N$).

12. Method according to one of claims 6 to 11, wherein in the completely filled drying hopper (10, $10_1$, $10_2$,...$10_N$) several layers ($30_1$, $30_2$, ...., $30_K$) of the bulk material (20) are formed, which were filled at different times into the drying hopper (10, $10_1$, $10_2$,...$10_N$), wherein by means of the control unit (3) a quantity of the bulk material (20) taken from the material suction box (16) is supplied via the material separator (8).

**Revendications**

1. Agencement pour déshumidifier une matière en vrac granulaire (20) en matière plastique comprenant :

- au moins un générateur de gaz sec (1) ;
- une unité de commande (3) avec une mémoire (17) ;
- au moins deux systèmes de séchage, chaque système de séchage comprenant :

  - une trémie de séchage $(10, 10_1, 10_2, ... 10_N)$ qui est reliée au générateur de gaz sec (1) par une première conduite (11) pour une amenée de gaz séché à partir du générateur de gaz sec (1) et par une deuxième conduite (12) pour une évacuation de gaz chargé d'humidité de la trémie de séchage $(10, 10_1, 10_2, ... 10_N)$ ;
  - un dispositif de chauffage (2) qui est disposé dans la première conduite (11) en amont de la trémie de séchage $(10, 10_1, 10_2, ... 10_N)$ ;
  - un capteur de débit (6) qui est prévu dans la première conduite (11) vers la trémie de séchage $(10, 10_1, 10_2, ... 10_N)$ ;
  - un capteur de niveau (7) qui est associé à un séparateur de matière (8) de chaque trémie de séchage $(10, 10_1, 10_2, ... 10_N)$ ;
  - un volet de réglage (4) pour régler automatiquement la quantité de gaz vers la trémie de séchage $(10, 10_1, 10_2, ... 10_N)$ ;
  - des premières liaisons de communication respectives (21) allant du capteur de niveau (7), du dispositif de chauffage (2) et du capteur de débit (6) à l'unité de commande (3) ; et
  - des deuxièmes liaisons de communication respectives (22) allant de l'unité de commande (3) au dispositif de chauffage (2) et au volet de réglage (4) pour le réglage automatique de la quantité de gaz et de sa température vers la trémie de séchage $(10, 10_1, 10_2, ... 10_N)$ ;

  **caractérisé en ce que** l'unité de commande (3) est conçue de telle sorte que le volet de commande (4) et le dispositif de chauffage (2) dans la première conduite (11) allant à la trémie de séchage respective $(10, 10_1, 10_2, ... 10_N)$ sont commandés selon les besoins en fonction du volet de commande (4) et du dispositif de chauffage (2) dans la première conduite (11) allant à une autre des trémies de séchage $(10, 10_1, 10_2, ... 10_N)$ de telle sorte que, dans la trémie de séchage $(10, 10_1, 10_2, ... 10_N)$ ayant le débit le plus élevé de matière en vrac (20), la quantité de gaz et la température soient réglées de telle sorte qu'elles correspondent à la quantité de gaz de consigne et à la température de consigne nécessaires.

2. Agencement selon la revendication 1, comprenant au moins une pompe à vide (5) qui est en liaison fluidique avec le séparateur de matière (8) de chaque trémie de séchage $(10, 10_1, 10_2, ... 10_N)$ par une conduite de vide (25), le séparateur de matière (8) étant relié par une conduite de matière (14) à au moins un réservoir $(9, 9_1, 9_2, ..., 9_M)$ de la matière en vrac $(20, 20_1, 20_2, ..., 20_M)$, la pompe à vide (5) étant reliée à l'unité de commande (3) aussi bien par la première liaison de communication (21) que par la deuxième liaison de communication (22), une extrémité de la conduite de vide (25) au séparateur de matière (8) étant par exemple recouverte par un filtre (36) pour empêcher que de la matière en vrac (20) puisse être aspirée dans la conduite de vide (25).

3. Agencement selon l'une des revendications précédentes, dans lequel le séparateur de matière (8) de chaque trémie de séchage $(10, 10_1, 10_2, ... 10_N)$ présente un volet de matière (32) qui peut être orienté dans la trémie de séchage respective $(10, 10_1, 10_2, ... 10_N)$, qui est fermé quand aucune matière en vrac (20) n'est présente dans le séparateur de matière (8) ou que de la matière en vrac (20) peut être transportée dans le séparateur de matière (8) et qui est ouvert vers la trémie de séchage respective $(10, 10_1, 10_2, ... 10_N)$ sur un signal du capteur de niveau (7) lorsque la quantité de consigne de matière en vrac (20) dans le séparateur de matière (8) est atteinte, afin que la trémie de séchage respective $(10, 10_1, 10_2, ... 10_N)$ soit toujours complètement remplie.

4. Agencement selon l'une des revendications précédentes, comprenant

   - une vanne (13) dans une conduite de matière (14) allant de la matière en vrac (20) au séparateur de matière (8) de ladite au moins une trémie de séchage $(10, 10_1, 10_2, ... 10_N)$ ; et/ou
   - une vanne (15) dans une conduite de matière (19) allant du caisson d'aspiration de matière (16) de ladite au moins une trémie de séchage $(10, 10_1, 10_2, ... 10_N)$ à un consommateur (18) de la matière en vrac (20) ; dans lequel, par exemple, des deuxièmes liaisons de communication respectives (22) allant à la vanne (13) dans la conduite de matière (14) depuis au moins un réservoir $(9, 9_1, 9_2, ..., 9_M)$ sont prévues pour empêcher que la conduite de matière (14) soit vidée par aspiration et pour déterminer avec précision une quantité de matière en vrac (20) arrivant dans ladite au moins une trémie de séchage $(10, 10_1, 10_2, ... 10_N)$, et à la vanne (15) pour libérer la matière en vrac (20) ayant une teneur en humidité définie de ladite au moins une trémie de séchage $(10, 10_1, 10_2, ... 10_N)$.

**5.** Agencement selon la revendication 1, dans lequel un ventilateur commandable (23) et un capteur de point de rosée et de débit (24) sont associés au générateur de gaz sec (1), et l'unité de commande centrale (3) est reliée au ventilateur (23) par la première liaison de communication (21), et le capteur de point de rosée et de débit (24) est relié à l'unité de commande centrale (3) par la deuxième liaison de communication (22).

**6.** Procédé pour déshumidifier une matière en vrac granulaire (20) au moyen d'au moins un générateur de gaz sec et d'au moins deux trémies de séchage ($10$, $10_1$, $10_2$, ... $10_N$), chaque trémie de séchage étant reliée au générateur de gaz sec (1) par une première conduite (11) pour une amenée de gaz séché à partir du générateur de gaz sec (1) et par une deuxième conduite (12) pour une évacuation de gaz chargé d'humidité de ladite au moins une trémie de séchage ($10$, $10_1$, $10_2$, ... $10_N$), le procédé comprenant les étapes suivantes :

• dans la trémie de séchage respective ($10$, $10_1$, $10_2$, ... $10_N$) sont formées au moins plusieurs couches ($30_1$, $30_2$, ..., $30_K$) d'un type de matière en vrac ($20$, $20_1$, $20_2$, ..., $20_M$) par le fait que le type de matière en vrac ($20$, $20_1$, $20_2$, ..., $20_M$) est transporté à partir d'un réservoir associé ($9_1$, $9_2$, ..., $9_M$) par l'intermédiaire d'un séparateur de matière (8) de ladite au moins une trémie de séchage ($10$, $10_1$, $10_2$, ... $10_N$) au moyen d'au moins une pompe à vide (5), le séparateur de matière (8) étant en liaison fluidique avec le réservoir respectif ($9$, $9_1$, $9_2$, ..., $9_M$) de la matière en vrac ($20$, $20_1$, $20_2$, ..., $20_M$) par une conduite de matière (14), et une vanne (13) qui est commandée par une unité de commande centrale (3) de manière à autoriser ou à empêcher le transport de la matière en vrac ($20$, $20_1$, $20_2$, ..., $20_M$) étant prévue dans la conduite de matière (14) allant du réservoir ($9$, $9_1$, $9_2$, ..., $9_M$) au séparateur de matière (8) ;
• le transport du type sélectionné de matière en vrac ($20$, $20_1$, $20_2$, ..., $20_M$) dans le séparateur de matière (8) est surveillé par un capteur de niveau (7), un signal du séparateur de matière (8) indiquant un remplissage complet du séparateur de matière (8) ou une quantité de transport de consigne nécessaire dans le séparateur de matière (8) de la trémie de séchage respective ($10$, $10_1$, $10_2$, ... $10_N$), qui est transmis à l'unité de commande centrale (3), et la vanne (13) dans la conduite de matière (14) provenant d'au moins un réservoir ($9$, $9_1$, $9_2$, ..., $9_M$) est commandée par l'unité de commande centrale (3) de telle sorte que la conduite de matière (14) est interrompue et qu'un volet de matière (32) est ouvert vers la trémie de séchage associée ($10$, $10_1$, $10_2$, ... $10_N$) ;
• une quantité de gaz pour la déshumidification de ladite au moins une couche ($30_1$, $30_2$, ..., $30_K$) de la matière en vrac ($20$, $20_1$, $20_2$, ..., $20_M$) dans la trémie de séchage respective ($10$, $10_1$, $10_2$, ... $10_N$) est mesurée par un capteur de débit (6) dans la première conduite (11) et le signal est transmis à l'unité de commande centrale (3), et
• l'unité de commande centrale (3) appelle des données depuis une mémoire (17) qui lui est associée, au moyen desquelles des grandeurs de réglage et de régulation de l'agencement sont calculées ;
**caractérisé en ce**
• **qu'**un volet de réglage (4) et un dispositif de chauffage (2) dans la première conduite (11) allant à la trémie de séchage respective ($10$, $10_1$, $10_2$, ... $10_N$) sont commandés selon les besoins par l'unité de commande centrale (3) en fonction du volet de commande (4) et du dispositif de chauffage (2) dans la première conduite (11) allant à une autre des trémies de séchage ($10$, $10_1$, $10_2$, ... $10_N$) de telle sorte que, dans la trémie de séchage ($10$, $10_1$, $10_2$, ... $10_N$) ayant le débit le plus élevé de matière en vrac (20), la quantité de gaz et la température soient réglées de telle sorte qu'elles correspondent à la quantité de gaz de consigne et à la température de consigne nécessaires.

**7.** Procédé selon la revendication 6, dans lequel les trémies de séchage ($10_1$, $10_2$, ... $10_N$) sont mises dans un mode d'attente lorsque, dans la trémie de séchage respective ($10_1$, $10_2$, ... $10_N$), une couche inférieure ($30_6$) de la matière en vrac (20) a été séchée à une teneur en humidité susceptible d'être traitée et qu'aucune matière en vrac n'a été prélevée des trémies de séchage ($10_1$, $10_2$, ... $10_N$) pendant une durée prédéterminée.

**8.** Procédé selon l'une des revendications 6 ou 7, dans lequel le séparateur de matière (8) de chaque trémie de séchage ($10$, $10_1$, $10_2$, ... $10_N$) présente le volet de matière (32) qui peut être orienté dans la trémie de séchage respective ($10$, $10_1$, $10_2$, ... $10_N$) et par lequel la matière en vrac respective ($20_1$, $20_2$, ..., $20_M$) est introduite dans la trémie de séchage respective ($10$, $10_1$, $10_2$, ... $10_N$) lorsque le volet de matière orientable (32) est ouvert en raison de la force de gravité de la matière en vrac ($20$, $20_1$, $20_2$, ..., $20_M$) transportée dans le séparateur de matière (8), qui correspond à la quantité de matière en vrac ($20$, $20_1$, $20_2$, ..., $20_M$) qui a été prélevée par l'intermédiaire du caisson d'aspiration de matière (16).

**9.** Procédé selon la revendication 8, dans lequel un débit de matière en vrac ($20$, $20_1$, $20_2$, ..., $20_M$) depuis la trémie de séchage respective ($10$, $10_1$, $10_2$, ... $10_N$) vers le consommateur associé (18) est calculé, et une vanne (15) dans une conduite de matière (19) allant du caisson d'aspiration de matière (16) au consommateur (18) est interrompue par l'unité de commande centrale (3) lorsque le temps de séchage restant pour la couche inférieure ($30_U$) de matière

en vrac ($20_1$, $20_2$, ..., $20_M$) se trouvant encore dans la trémie de séchage (10, $10_1$, $10_2$, ... $10_N$) ne suffit pas pour atteindre une teneur en humidité de consigne de la matière en vrac ($20_1$, $20_2$, ..., $20_M$) de la couche inférieure ($30_U$).

10. Procédé selon la revendication 6, dans lequel des données sur le volume de chaque trémie de séchage (10, $10_1$, $10_2$, ... $10_N$), sur le volume de chaque séparateur de matière (8), sur des paramètres de matière de la matière en vrac ($20_1$, $20_2$, ..., $20_M$), tels que par exemple le numéro de matière, la désignation de la matière, la température de consigne pour la quantité de gaz ou d'air amenée dans la trémie de séchage respective (10, $10_1$, $10_2$, ... $10_N$) pour déshumidifier la matière, sur le temps de séchage minimal du type de matière en vrac dans la trémie de séchage respective (10, $10_1$, $10_2$, ... $10_N$) et sur la quantité de gaz de consigne pour la matière dans la trémie de séchage respective (10, $10_1$, $10_2$, ... $10_N$) sont stockées dans une base de données (17) associée à l'unité de commande centrale (3), et dans lequel l'unité de commande centrale (3) calcule les grandeurs de réglage et de régulation de l'agencement au moyen de ces données.

11. Procédé selon la revendication 6, dans lequel le nombre d'opérations de transport pour un remplissage complet de la trémie de séchage (10, $10_1$, $10_2$, ... $10_N$) est déterminé au moyen de données sur le volume de la trémie de séchage (10, $10_1$, $10_2$, ..., $10_N$) associée au séparateur de matière respectif (8) et sur le volume de la trémie de séchage respective (10, $10_1$, $10_2$, ..., $10_N$).

12. Procédé selon l'une des revendications 6 à 11, dans lequel plusieurs couches ($30_1$, $30_2$, ..., $30_K$) de la matière en vrac (20) sont formées dans la trémie de séchage (10, $10_1$, $10_2$, ... $10_N$) complètement remplie, qui ont été remplies à différents moments dans la trémie de séchage (10, $10_1$, $10_2$, ... $10_N$), dans lequel, au moyen de l'unité de commande (3), une quantité de la matière en vrac (20) prélevée du caisson d'aspiration de matière (16) est amenée par l'intermédiaire du séparateur de matière (8).

**Fig. 1**

EP 3 258 197 B1

**Fig. 2**

Fördern mindestens einer Schicht eines Schüttguttyps
aus einem zugeordneten Reservoir
in mindestens einen Trocknungstrichter

Überwachen der Förderung des ausgewählten
Schüttguttyps in den Materialabscheider mit einem
Füllstandsensor bis zur kompletten Befüllung des
jeweiligen Materialabscheiders

Übermitteln eines Signals vom Füllstandsensor an die
zentrale Steuerung, dass der jeweilige Materialabscheider
komplett befüllt ist, und die zentrale Steuerung die
Förderung aus dem entsprechenden Reservoir unterbricht

Messen einer Gasmenge für die Entfeuchtung der mit einen
Durchflusssensor in einer ersten Leitung zum jeweiligen
Trocknungstrichter und Übermitteln des Signals an die
zentrale Steuerung

Abrufen von Daten, wie z.B. Materialstammdaten und
diverse Zeiten zu den einzelnen Schichten im
Trocknungstrichter aus einem Speicher und damit
berechnen von Stell- und Regelgrößen der Anordnung

Automatisches Einstellen einer Stellklappe und einer
Heizung über die zentrale Steuerung, damit dem  jeweiligen
Trocknungstrichter die erforderliche Gasmenge mit der
erforderlichen Temperatur zugeführt wird, damit für das
Schüttgut in der mindestens einen Schicht im
Trocknungstrichter innerhalb einer vorbestimmten
Trocknungszeit der für die Verarbeitung erforderliche Soll-
Feuchtegehalt eingestellt wird

Fig. 3

Fig. 4

$30_1$

$30_2$

$30_3$

$30_4$

$30_5$

$30_6$

7

8

20

20

20

20

20

20

20

20

10

15

16

18

19

$t_1$

$t_2$

$t_3$

$t_4$

$t_5$

$t_6$

Fig. 5

Überwachung der Trockentrichter

Meldungen:

| Uhrzeit | Datum | Text |
|---------|-------|------|

*42*

Rezepturen
Materialübersicht — *43*

TT — *43*

TT-Kurven — *43*

Trockenlufterzeuger — *43*

Trockenlufterzeuger Kurven — *43*

System — *43*

Archiv — *43*

Benutzer
anmelden — *43*

Reset

*41*

*40*

*43*

Fig. 6

EP 3 258 197 B1

Fig. 7

Fig. 8

Fig. 9

EP 3 258 197 B1

Fig. 10

Fig. 11

EP 3 258 197 B1

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19719483 A1
- DE 3929858 A1
- EP 2186613 A
- EP 2224196 A1